(19) Europäisches Patentamt
European Patent Office
Office européen des brevets

(11) EP 1 382 981 A1

(12) **DEMANDE DE BREVET EUROPEEN**

(43) Date de publication:
**21.01.2004 Bulletin 2004/04**

(51) Int Cl.[7]: **G02B 6/16**, G02B 6/22, H04B 10/18, G02B 6/34

(21) Numéro de dépôt: **03291729.6**

(22) Date de dépôt: **11.07.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **18.07.2002 FR 0209136**

(71) Demandeur: **ALCATEL**
**75008 Paris (FR)**

(72) Inventeurs:
- **Sillard, Pierre**
**78150 Le Chesnay (FR)**
- **Provost, Lionel**
**91460 Marcoussis (FR)**
- **Beaumont, Florent**
**78700 Conflans Ste. Honorine (FR)**
- **Fleury, Ludovic**
**78390 Bois d'Arcy (FR)**
- **Gorlier, Maxime**
**75008 Paris (FR)**
- **Molin, Denis**
**78150 Le Chesnay (FR)**
- **de Montmorillon, Louis-Anne**
**75017 Paris (FR)**
- **Nouchi, Pascale**
**78600 Maisons-Lafitte (FR)**

(74) Mandataire: **Vigand, Régis Louis Michel et al**
**Compagnie Financière Alcatel**
**Département de Propriété Industrielle,**
**5, rue Noel Pons**
**92734 Nanterre Cedex (FR)**

(54) **Fibre optique à gestion de dispersion**

(57) L'invention concerne le domaine des fibres optiques pour réseau de transmission à multiplexage en longueur d'onde.

C'est une fibre optique (1) à gestion de dispersion, pour réseau de transmission à multiplexage en longueur d'onde, comportant des portions (T+) de fibre optique à dispersion chromatique positive alternant longitudinalement avec des portions (T-) de fibre optique à dispersion chromatique négative, comportant successivement du centre vers la périphérie un coeur présentant un profil d'indice variable puis une gaine d'indice constant, le rayon extérieur du profil d'indice du coeur, limite entre le coeur et la gaine, étant suffisamment faible pour que la fibre optique soit monomode en câble, chaque portion (T+, T-) de fibre optique présentant à la longueur d'onde de 1550nm, une dispersion chromatique dont la valeur absolue est comprise entre 1ps/nm.km et 10ps/nm.km, une pente de dispersion chromatique dont la valeur absolue est inférieure à 0,015ps/nm$^2$.km et une surface effective supérieure à 35µm$^2$, la différence relative de surface effective, à la longueur d'onde de 1550nm, entre les portions (T+) de fibre optique à dispersion chromatique positive et les portions (T-) de fibre optique à dispersion chromatique négative, étant inférieure à 7%, chaque portion (T+, T-) de fibre optique, pour une longueur d'onde de 1625nm, présentant des pertes par courbure pour 100 tours pour un diamètre de 60mm inférieures à 0,1dB.

FIG_16

Dispersion (ps/nm.km)
8
6
4
2
0
-2
-4
-6
-8
1450
1475
1500
1525
1550
1575
1600
1625
1650
1675
Longueur d'onde (nm)

EP 1 382 981 A1

## Description

L'invention concerne le domaine des fibres optiques pour réseau de transmission à multiplexage en longueur d'onde.

L'augmentation des débits d'information sur ce type de réseau impose une compensation de la dispersion chromatique et de la pente de dispersion sur une bande spectrale de plus en plus large. La bande dite S correspond à une bande spectrale allant approximativement de 1460nm à 1530nm. La bande dite C correspond à une bande spectrale allant approximativement de 1530nm à 1565nm. La bande dite L correspond à une bande spectrale allant approximativement de 1565nm à 1625nm. La bande dite U correspond à une bande spectrale allant approximativement de 1625nm à 1675nm. La bande spectrale la plus couramment utilisée est la bande C. De plus en plus, apparaît une tendance à vouloir, en plus de la bande C, utiliser les bandes S et L, voire même la bande U.

Pour cela, selon un premier art antérieur, il est connu d'utiliser une fibre optique à gestion de dispersion (« Dispersion Managed Fiber" en terminologie anglo-saxonne correspondant au sigle DMF) présentant une alternance longitudinale de portions de fibre optique à dispersion chromatique positive et de portions de fibre optique à dispersion chromatique négative. La dispersion chromatique pour l'ensemble de la fibre optique à gestion de dispersion est ainsi aisément compensée pour une longueur d'onde donnée. Par contre, lorsque la plage spectrale d'utilisation de la fibre optique à gestion de dispersion augmente, la dispersion chromatique doit être compensée sur une plage spectrale importante, c'est-à-dire que la pente de dispersion chromatique doit également être compensée, cette compension de pente de dispersion chromatique étant en pratique nettement plus difficile à réaliser et s'accompagnant souvent d'une dégradation de certains autres paramètres de la fibre optique à gestion de dispersion comme notamment sa surface effective.

Selon un deuxième art antérieur, il est connu d'associer certains types de fibres optiques à dispersion décalée réduisant les effets non-linéaires croisés (« non-zéro dispersion shifted fiber » en terminologie anglo-saxonne correspondant à l'abréviation NZ-DSF) à des fibres de compensation de dispersion (« dispersion compensating fiber » en terminologie anglo-saxonne correspondant à l'abréviation DCF), ce qui permet d'obtenir une ligne de transmission dont la dispersion est nulle sur un grand intervalle spectral. Un inconvénient de cette association de fibres à disperstion décalée et de fibres de compensation de dispersion réside dans les fortes pertes que présente la fibre de compensation de dispersion, notamment l'atténuation linéique et les pertes par courbure, ainsi que la présence d'une PMD (« polarization mode dispersion » en terminologie anglo-saxonne) importante, ce qui limite l'augmentation du débit d'information.

La solution proposée par l'invention comprend l'utilisation d'une fibre à gestion de dispersion, la pente de dispersion des différentes portions de fibre optique étant suffisamment faible pour que, même en l'absence d'une inversion rigoureuse de pente de dispersion chromatique entre les portions de fibre optique à dispersion chromatique positive et les portions de fibre optique à dispersion chromatique négative, la dispersion moyenne de la fibre optique à gestion de dispersion ainsi obtenue soit très faible voire presque nulle sur une plage spectrale importante englobant les bandes S, C, L et de préférence U. On obtient ainsi ce qu'on peut appeler une fibre optique à gestion de dispersion « à dispersion plate ». Le fait de ne pas être obligé d'inverser rigoureusement la pente de dispersion chromatique a l'avantage supplémentaire de ne pas entraîner d'effondrement de la valeur de la surface effective le long de la fibre optique à gestion de dispersion ainsi obtenue. Par ailleurs, l'alternance entre portions de fibre optique à dispersion chromatique positive et portions de fibre optique à dispersion chromatique négative peut, compte tenu des faibles pentes de dispersion chromatique des différentes portions, avantageusement être obtenue par une homothétie radiale du profil d'indice du coeur, la valeur du rapport d'homothétie restant relativement faible et n'entraînant pas de dégradation notable des propriétés de la fibre optique à gestion de dispersion ainsi obtenue, et notamment pas de dégradation notable de la surface effective lors du passage d'une portion de fibre optique à dispersion chromatique positive à une fibre optique à dispersion chromatique négative.

Selon l'invention, il est prévu une fibre optique à gestion de dispersion, pour réseau de transmission à multiplexage en longueur d'onde, comportant des portions de fibre optique à dispersion chromatique positive alternant longitudinalement avec des portions de fibre optique à dispersion chromatique négative, comportant successivement du centre vers la périphérie un coeur présentant un profil d'indice variable puis une gaine d'indice constant, le rayon extérieur du profil d'indice du coeur, limite entre le coeur et la gaine, étant suffisamment faible pour que la fibre optique soit monomode en câble, chaque portion de fibre optique présentant à la longueur d'onde de 1550nm, une dispersion chromatique dont la valeur absolue est comprise entre 1ps/nm.km et 10ps/nm.km une pente de dispersion chromatique dont la valeur absolue est inférieure à 0,015ps/nm$^2$.km et une surface effective supérieure à 35µm$^2$, la différence relative de surface effective, à la longueur d'onde de 1550nm, entre les portions de fibre optique à dispersion chromatique positive et les portions de fibre optique à dispersion chromatique négative, étant inférieure à 7%, chaque portion de fibre optique, pour une longueur d'onde de 1625 nm, présentant des pertes par courbure pour 100 tours pour un diamètre de 60mm inférieures à 0,1dB.

Dans une fibre optique à gestion de dispersion « à dispersion plate » selon l'art antérieur, entre une portion de fibre optique à dispersion chromatique positive et une portion de fibre optique à dispersion chromatique négative, la pente de dispersion chromatique est inversée, cette inversion étant réalisée par une homothétie du profil d'indice avec un rapport important, ce qui entraîne alors une réduction importante de la surface effective, ce qui est un inconvénient. Pour conserver une surface effective élevée, on utilise un rapport moins important pour l'homothétie du profil d'indice, la pente n'étant alors pas rigoureusement inversée, la fibre optique à gestion de dispersion n'est alors pas « à dispersion plate ». Tandis que dans une fibre optique à gestion de dispersion selon l'invention, comme la pente de la portion de fibre optique à dispersion positive est déjà relativement faible, d'une part l'inversion de pente est plus facile à réaliser, et d'autre part même si l'inversion de pente n'est pas rigoureuse, ladite pente étant faible, la dispersion chromatique de la fibre optique à gestion de dispersion obtenue par alternance de portions de fibre optique à disperstion chromatique positive et de portions de fibre optique à dispersion chromatique négative est quant à elle relativement « plate ». Deux avantages concernant la surface effective en découlent, d'une part la surface effective des portions de fibre optique à dispersion chromatique négative est relativement élevée, et d'autre part la surface effective des portions de fibre optique à dispersion chromatique négative est relativement proche de la surface effective des portions de fibre optique à dispersion chromatique positive. Une telle fibre optique « à dispersion plate » est déjà comprise dans l'art antérieur, elle est en effet décrite dans la demande de brevet WO 00/63732, mais le rayon extérieur du profil d'indice de coeur est élevé ce qui rend ladite fibre optique multimode en câble.

Les fibres optiques à gestion de dispersion selon l'invention présentent un rayon extérieur du profil d'indice du coeur, lequel rayon extérieur est la limite entre le coeur et la gaine, qui est suffisamment faible pour que lesdites fibres optiques soient monomodes en câble. Pour les exemples considérés ultérieurement, correspondant tous à des profils d'indice de coeur à trois ou quatre tranches, le majorant, pour les portions de fibre optiques à dispersion positive et pour les portions de fibre optique à disperstion négative, de ce rayon extérieur est choisi inférieur à 16µm pour un profil à quatre tranches et inférieur à 10,5µm pour un profil à trois tranches, ce qui assure un comportement monomode en câble des fibres optiques de gestion de dispersion « à dispersion plate » selon l'invention correspondantes.

De préférence, la différence relative de rayon extérieur, entre les portions de fibre optique à dispersion chromatique positive et les portions de fibre optique à dispersion chromatique négative, est choisie inférieure à 11%, de façon à minimiser la variation de surface effective entre les portions de fibre optique à dispersion chromatique positive et les portions de fibre optique à dispersion chromatique négative.

Dans un premier mode de réalisation préférentiel de l'invention, la fibre optique à gestion de dispersion selon l'invention comprend un premier type de profil d'indice variable du coeur à trois tranches. Le premier type de profil d'indice variable du coeur est successivement constitué, du centre vers la périphérie, d'une tranche centrale d'indice maximum supérieur à l'indice de la gaine, d'une tranche enterrée d'indice minimum inférieur à l'indice de la gaine, d'une tranche annulaire d'indice maximum supérieur à l'indice de la gaine et inférieur à l'indice maximum de la tranche centrale. La tranche centrale est de préférence en forme de trapèze, mais elle peut aussi être en forme de rectangle ou de triangle ou en alpha.

Afin d'améliorer la platitude spectrale de la dispersion chromatique de la fibre optique à gestion de dispersion selon l'invention ainsi que ses autres propriétés, un certain nombre des plages ou de relations préférentielles pour les indices et les rayons du premier type de profil d'indice du coeur vont maintenant être données.

De préférence, la moyenne, sur l'ensemble des portions de fibre optique, de la différence $\Delta n_1$ entre l'indice maximum de la tranche centrale et l'indice de la gaine, est comprise entre $7{,}00.10^{-3}$ et $11{,}0.10^{-3}$, et la moyenne, sur l'ensemble des portions de fibre optique, du rayon $r_1$ de la partie de la tranche centrale présentant un indice supérieur à l'indice de la gaine, est comprise entre 2,65µm et 3,70µm.

De préférence, pour une portion moyenne de fibre optique dont les valeurs de rayon du profil d'indice correspondraient aux moyennes des valeurs de rayon des profils d'indice de l'ensemble des portions de fibre optique, la valeur de l'intégrale,

$$S_{01} = \int_0^{r1} \Delta n(r).dr$$

, entre un rayon nul et le rayon $r_1$ de la partie de la tranche centrale présentant un indice supérieur à l'indice de la gaine, de la différence d'indice par rapport à l'indice de la gaine, est supérieure à $23{,}0.10^{-3}$ µm.

De préférence, pour une portion moyenne de fibre optique dont les valeurs de rayon du profil d'indice correspondraient aux moyennes des valeurs de rayon des profils d'indice de l'ensemble des portions de fibre optique, la valeur du double de l'intégrale,

$$S_1 = 2.\int_0^{r1} \Delta n(r).r.dr$$

, entre un rayon nul et le rayon $r_1$ de la partie de la tranche centrale présentant un indice supérieur à l'indice de la gaine, du produit du rayon par la différence d'indice par rapport à la gaine, est comprise entre $58.10^{-3}$ et $99.10^{-3}$ µm$^2$.

De préférence, pour une portion moyenne de fibre optique dont les valeurs de rayon du profil d'indice correspondraient aux moyennes des valeurs de rayon des profils d'indice de l'ensemble des portions de fibre optique, la valeur du triple de l'intégrale,

$$S_{11} = 3.\int_0^{r1} \Delta n(r).r^2.dr$$

entre un rayon nul et le rayon ($r_1$) de la partie de la tranche centrale présentant un indice supérieur à l'indice de la gaine, du produit du carré du rayon par la différence d'indice par rapport à l'indice de la gaine, est comprise entre $150.10^{-3}\mu m^3$ et $335.10^{-3}\mu m^3$

De préférence, la moyenne, sur l'ensemble des portions de fibre optique, de la différence $\Delta n_2$ entre l'indice minimum de la tranche enterrée et l'indice de la gaine, est comprise entre $-9{,}0.10^{-3}$ et $-2{,}5.10^{-3}$, et la moyenne, sur l'ensemble des portions de fibre optique, du rayon extérieur $r_2$ de la tranche enterrée, est comprise entre 4,00μm et 8,10μm.

De préférence, pour une portion moyenne de fibre optique dont les valeurs de rayon du profil d'indice correspondraient aux moyennes des valeurs de rayon des profils d'indice de l'ensemble des portions de fibre optique, la valeur de l'intégrale,

$$S_{02} = \int_{r1}^{r2} \Delta n(r).dr$$

, entre le rayon $r_1$ de la partie de la tranche centrale présentant un indice supérieur à l'indice de la gaine et le rayon extérieur $r_2$ de la tranche enterrée, de la différence d'indice par rapport à l'indice de la gaine, est comprise entre $-22{,}0.10^{-3}\mu m$ et $-8{,}0.10^{-3}$ μm.

De préférence, la moyenne, sur l'ensemble des portions de fibre optique, de la différence $\Delta n_3$ entre l'indice maximum de la tranche annulaire et l'indice de la gaine, est comprise entre $0{,}50.10^{-3}$ et $7{,}5.10^{-3}$, et la moyenne, sur l'ensemble des portions de fibre optique, du rayon extérieur $r_3$ de la tranche annulaire, est comprise entre 6,70μm et 10,50μm.

De préférence, pour une portion moyenne de fibre optique dont les valeurs de rayon du profil d'indice correspondraient aux moyennes des valeurs de rayon des profils d'indice de l'ensemble des portions de fibre optique, la valeur de l'intégrale,

$$S_{03} = \int_{r2}^{r3} \Delta n(r).dr$$

entre le rayon extérieur $r_2$ de la tranche enterrée et le rayon extérieur $r_3$ de la tranche annulaire, de la différence d'indice par rapport à l'indice de la gaine, est comprise entre $1{,}0.10^{-3}\mu m$ et $15.10^{-3}\mu m$.

Dans un deuxième mode de réalisation préférentiel de l'invention, la fibre optique à gestion de dispersion selon l'invention comprend un deuxième type de profil d'indice variable du coeur à quatre tranches. Le deuxième type de profil d'indice variable du coeur est successivement constitué, du centre vers la périphérie, d'une tranche centrale d'indice maximum supérieur à l'indice de la gaine, d'une première tranche enterrée d'indice minimum inférieur à l'indice de la gaine, d'une tranche annulaire d'indice maximum supérieur à l'indice de la gaine et inférieur à l'indice maximum de la tranche centrale, d'une deuxième tranche enterrée d'indice minimum inférieur à l'indice de la gaine. La tranche centrale est de préférence en forme de rectangle, mais elle peut aussi être en forme de trapèze ou de triangle ou en alpha.

Afin d'améliorer la platitude spectrale de la dispersion chromatique de la fibre optique à gestion de dispersion selon l'invention ainsi que ses autres propriétés, un certain nombre des plages ou de relations préférentielles pour les indices et les rayons du deuxième type de profil d'indice du coeur vont maintenant être données.

De préférence, la moyenne, sur l'ensemble des portions de fibre optique, de la différence $\Delta n_1$ entre l'indice maximum de la tranche centrale et l'indice de la gaine, est comprise entre $7{,}0.10^{-3}$ et $10{,}0.10^{-3}$, et la moyenne, sur l'ensemble des portions de fibre optique, du rayon $r_1$ de la partie de la tranche centrale présentant un indice supérieur à l'indice de la gaine, est comprise entre 2,5μm et 3,5μm.

De préférence, la moyenne, sur l'ensemble des portions de fibre optique, de la différence $\Delta n_2$ entre l'indice minimum de la première tranche enterrée et l'indice de la gaine, est comprise entre $-9{,}0.10^{-3}$ et $-2{,}5.10^{-3}$, et la moyenne, sur l'ensemble des portions de fibre optique, du rayon extérieur $r_2$ de la tranche enterrée, est comprise entre 4,1μm et 7,0μm.

De préférence, la moyenne, sur l'ensemble des portions de fibre optique, de la différence $\Delta n_3$ entre l'indice maximum de la tranche annulaire et l'indice de la gaine, est comprise entre $0{,}5.10^{-3}$ et $5{,}0.10^{-3}$, et la moyenne, sur l'ensemble des portions de fibre optique, du rayon extérieur $r_3$ de la tranche annulaire, est comprise entre 9,0μm et 13,0μm.

De préférence, la moyenne, sur l'ensemble des portions de fibre optique, de la différence $\Delta n_4$ entre l'indice minimum de la deuxième tranche enterrée et l'indice de la gaine, est comprise entre $-9{,}0.10^{-3}$ et $-2{,}0.10^{-3}$, et la moyenne, sur l'ensemble des portions de fibre optique, du rayon extérieur $r_4$ de la deuxième tranche enterrée, est comprise entre 12,0μm et 16,0μm.

Le long de la fibre optique à gestion de dispersion selon l'invention, le passage d'une portion de fibre optique à dispersion chromatique positive à une portion de fibre optique à dispersion chromatique négative s'effectue par une homothétie du profil d'indice du coeur, et vice-versa. Cette homothétie peut être réalisée de plusieurs manières. D'une manière préférentielle, la fibre optique à gestion de dispersion selon l'invention est obtenue, par tirage, à partir de la modification des propriétés d'une seule et même préforme. Cette modification peut par exemple être obtenue soit par étirage variable de la préforme suivie d'un fibrage à diamètre constant soit par fibrage à diamètre variable. La fibre optique à gestion de dispersion peut aussi être obtenue par exemple par concaténation de tronçons de fibre optique, alternant les tronçons à dispersion chromatique positive et les tronçons à dispersion chromatique négative.

L'invention sera mieux comprise et d'autres particularités et avantages apparaîtront à l'aide de la description ci-après et des dessins joints, donnés à titre d'exemples, où:

- la figure 1 représente schématiquement une fibre optique à gestion de dispersion ;
- la figure 2 représente schématiquement un premier type de profil à trois tranches d'une fibre optique à gestion de dispersion selon l'invention ;
- la figure 3 représente un tableau comprenant les valeurs moyennes de rayons et de différences d'indice pour une dizaine d'exemples de profils du premier type de fibre optique à gestion de dispersion selon l'invention ;
- la figure 4 représente un tableau comprenant les variations relatives extrêmes des rayons par rapport à leurs valeurs moyennes de la figure 3 et certaines propriétés des profils correspondants de fibre optique à gestion de dispersion selon l'invention ;
- la figure 5 représente un tableau comprenant les valeurs moyennes de rayons et de différences d'indice pour cinq exemples supplémentaires de profils du premier type de fibre optique à gestion de dispersion selon l'invention ;
- la figure 6 représente un tableau comprenant les variations relatives extrêmes des rayons par rapport à leurs valeurs moyennes de la figure 5 et certaines propriétés des profils correspondants de fibre optique à gestion de dispersion selon l'invention ;
- la figure 7 représente un tableau comprenant d'autres propriétés des profils de fibre optique à gestion de dispersion selon l'invention définis à la figure 4;
- la figure 8 représente un tableau comprenant d'autres propriétés des profils de fibre optique à gestion de dispersion selon l'invention définis à la figure 6;
- la figure 9 représente un tableau comprenant des moyennes des propriétés des profils de fibre optique à gestion de dispersion selon l'invention définis aux figures 7 et 8 ;
- la figure 10 représente schématiquement un deuxième type de profil à quatre tranches d'une fibre optique à gestion de dispersion selon l'invention ;
- la figure 11 représente un tableau comprenant les valeurs moyennes de rayons et de différences d'indice pour une dizaine d'exemples de profils du deuxième type de fibre optique à gestion de dispersion selon l'invention ;
- la figure 12 représente un tableau comprenant les variations relatives extrêmes des rayons par rapport à leurs valeurs moyennes de la figure 11 et certaines propriétés des profils correspondants de fibre optique à gestion de dispersion selon l'invention ;
- la figure 13 représente un tableau comprenant d'autres propriétés des profils de fibre optique à gestion de dispersion selon l'invention définis à la figure 12;
- la figure 14 représente un tableau comprenant des moyennes des propriétés des profils de fibre optique à gestion de dispersion selon l'invention définis à la figure 13 ;
- la figure 15 représente schématiquement, sur une large plage spectrale, les variations de dispersion chormatique, positive, moyenne et négative, de l'exemple n°4 défini aux figures 3 et 4 ;
- la figure 16 représente schématiquement, sur une plage spectrale plus étroite, un agrandissement de la figure 15 ;
- la figure 17 représente schématiquement, sur une large plage spectrale, les variations de dispersion chormatique, positive, moyenne et négative, de l'exemple n°5 défini aux figures 3 et 4 ;
- la figure 18 représente schématiquement, sur une plage spectrale plus étroite, un agrandissement d'une partie de la figure 17 ;
- la figure 19 représente schématiquement, sur une large plage spectrale, les variations de dispersion chormatique, positive, moyenne et négative, de l'exemple n°7 défini aux figures 3 et 4 ;
- la figure 20 représente schématiquement, sur une plage spectrale plus étroite, un agrandissement d'une partie de la figure 19 ;
- la figure 21 représente schématiquement, sur une large plage spectrale, les variations de dispersion chormatique, positive, moyenne et négative, de l'exemple n°10 défini aux figures 3 et 4 ;
- la figure 22 représente schématiquement, sur une plage spectrale plus étroite, un agrandissement d'une partie de la figure 21 ;
- la figure 23 représente schématiquement, sur une large plage spectrale, les variations de dispersion chormatique, positive, moyenne et négative, de l'exemple n°20 défini aux figures 11 et 12 ;
- la figure 24 représente schématiquement, sur une plage spectrale plus étroite, un agrandissement d'une partie de la figure 23.

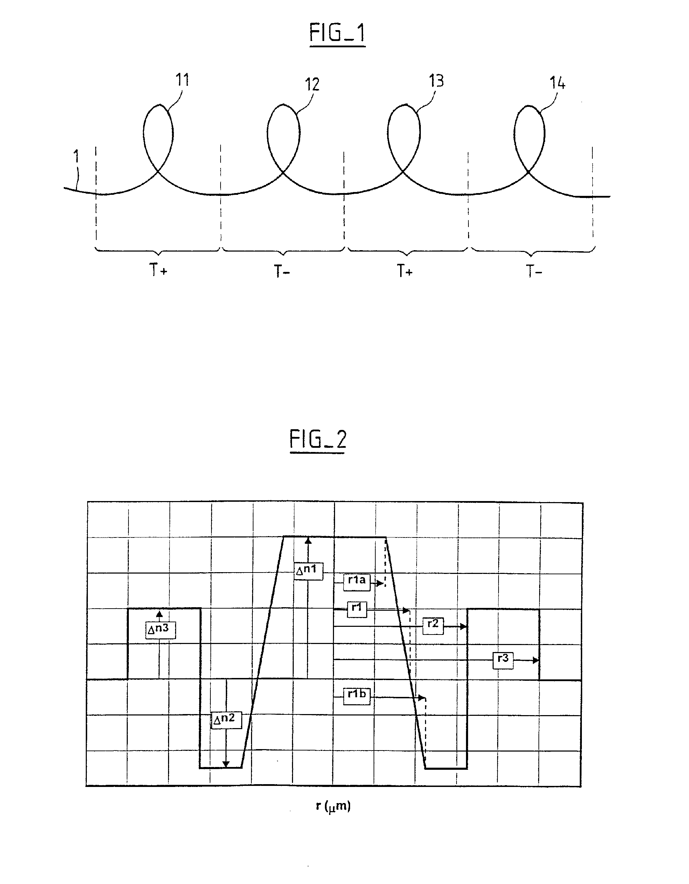

La figure 1 représente schématiquement une fibre optique à gestion de dispersion. La fibre optique 1 à gestion de dispersion comprend une alternance de portions T+ de fibre optique à dispersion chromatique positive et de portions T- de fibre optique à dispersion chromatique négative. Seules quatre portions sont représentées sur la figure 1 pour des raisons de simplicité, mais la fibre optique 1 peut en comporter beaucoup plus. Entre deux portions T+ 11 et 13 se trouve une portion T- 12. Entre deux portions T- 12 et 14 se trouve une portions T+ 13. Les portions T+ et T- sont par exemple de la même longueur.

La figure 2 représente schématiquement un premier type de profil à trois tranches d'une fibre optique à gestion de dispersion selon l'invention. La première tranche appelée tranche centrale présente une différence maximale d'indice $\Delta n1$ avec l'indice constant de la gaine et un rayon extérieur r1b. La différence d'indice maximale $\Delta n1$ est positive. De préférence, entre un rayon nul et le rayon r1a, l'indice est constant et maximum, il devient égal à celui de la gaine pour une valeur r1 du rayon et atteint celui de la deuxième tranche pour une valeur r1b. Dans le cas où r1a n'est pas nul et où r1a est différent de r1b, la première tranche est en forme de trapèze. Dans le cas où r1a n'est pas nul et où r1a est égal à r1b, la première tranche est en forme de rectangle. Dans le cas où r1a est nul et où r1b n'est pas nul, la première tranche est en forme de triangle. La deuxième tranche appelée tranche enterrée présente une différence maximale d'indice $\Delta n2$ avec l'indice constant de la gaine et un rayon extérieur r2. La différence d'indice maximale $\Delta n2$ est négative. De préférence, entre le rayon r1b et le rayon r2, l'indice est constant. La troisième tranche appelée tranche annulaire présente une différence maximale d'indice $\Delta n3$ avec l'indice constant de la gaine et un rayon extérieur r3. La différence d'indice maximale $\Delta n3$ est positive. De préférence, entre le rayon r2 et le rayon r3, l'indice est constant. Au delà du rayon r3 se trouve la gaine d'indice constant.

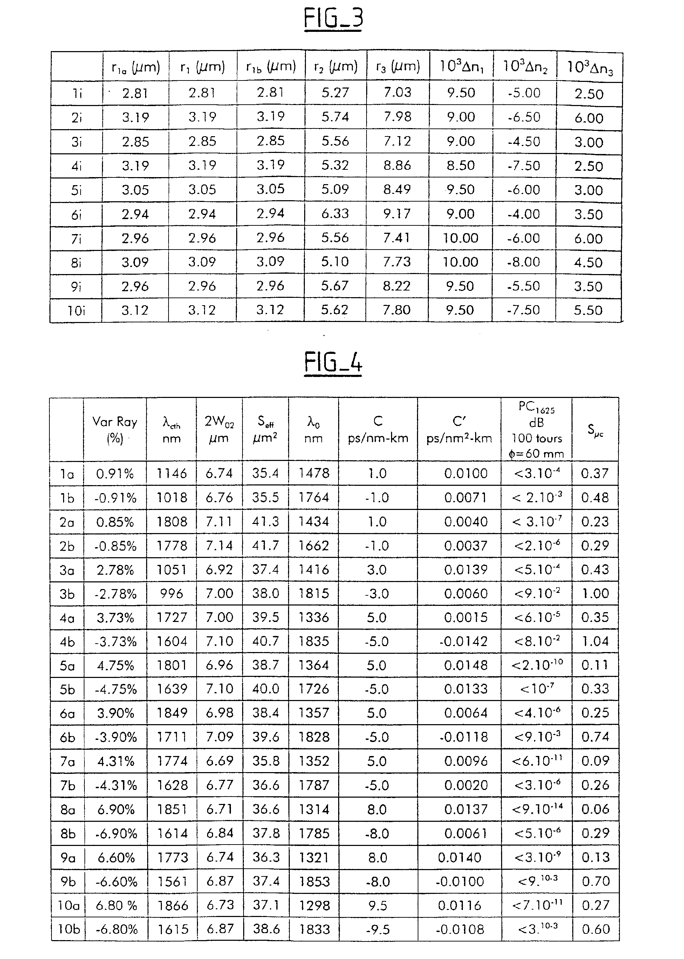

La figure 3 représente un tableau comprenant les valeurs moyennes de rayons et de différences d'indice pour une dizaine d'exemples de profils du premier type de fibre optique à gestion de dispersion selon l'invention. La colonne de gauche comprend la dénomination des exemples du n°1 au n°10. L'indice i pour initial indique que les valeurs de rayon données le sont pour une moyenne entre les rayons des portions T+ et les rayons des portions T-. Les quatre colonnes suivantes expriment en µm des rayons du profil d'indice variable de coeur. Les trois dernières colonnes expriment mille fois des différences d'indice (sans unité).

La figure 4 représente un tableau comprenant les variations relatives extrêmes des rayons par rapport à leurs valeurs moyennes de la figure 3 et certaines propriétés des profils correspondants de fibre optique à gestion de dispersion selon l'invention. La colonne de gauche comprend la dénomination des exemples du n°1 au n°10. L'indice a correspond à une portion T+ obtenue à partir des valeurs de l'indice i correspondant après application d'une homothétie dont le rapport est la somme de l'unité et du paramètre VarRay exprimée en %; par exemple avec VarRay valant 0.91%, le rapport de l'homothétie vaut 1,0091. L'indice b correspond à une portion T- obtenue à partir des valeurs de l'indice i correspondant après application d'une homothétie dont le rapport est la somme de l'unité et du paramètre VarRay exprimée en % ; par exemple avec VarRay valant -0.91%, le rapport de l'homothétie vaut 0,9909. Le paramètre VarRay est situé dans la deuxième colonne. Pour chaque exemple considéré, les autres colonnes représentent des propriétés de la portion de fibre optique correspondant à l'exemple considéré. La colonne suivante représente la longueur de coupure théorique $\lambda_{cth}$ exprimée en nm. La colonne suivante représente le diamètre de mode $2W_{02}$, à la longueur d'onde de 1550nm, exprimé en µm. La colonne suivante représente la surface effective exprimée en $\mu m^2$. La colonne suivante représente la longueur d'onde $\lambda_0$ d'annulation de la dispersion chromatique exprimée en nm. La colonne suivante représente la dispersion chromatique C exprimée en ps/nm.km à une longueur d'onde valant 1550nm. La colonne suivante représente la pente de dispersion chromatique C' exprimée en $ps/nm^2.km$ à une longueur d'onde valant 1550nm. La colonne suivante représente des seuils maximum de pertes par courbure PC pour 100 tours pour un diamètre de 60mm à une longueur d'onde de 1625nm exprimés en dB. Par exemple, pour l'exemple 1a, lesdites pertes par courbure sont inférieures à $3.10^{-4}$ dB.La dernière colonne représente la sensibilité aux microcourbures, à une longueur d'onde de 1550nm, donnée en proportion par rapport à la fibre G652 commercialisée par la demanderesse sous cette référence.

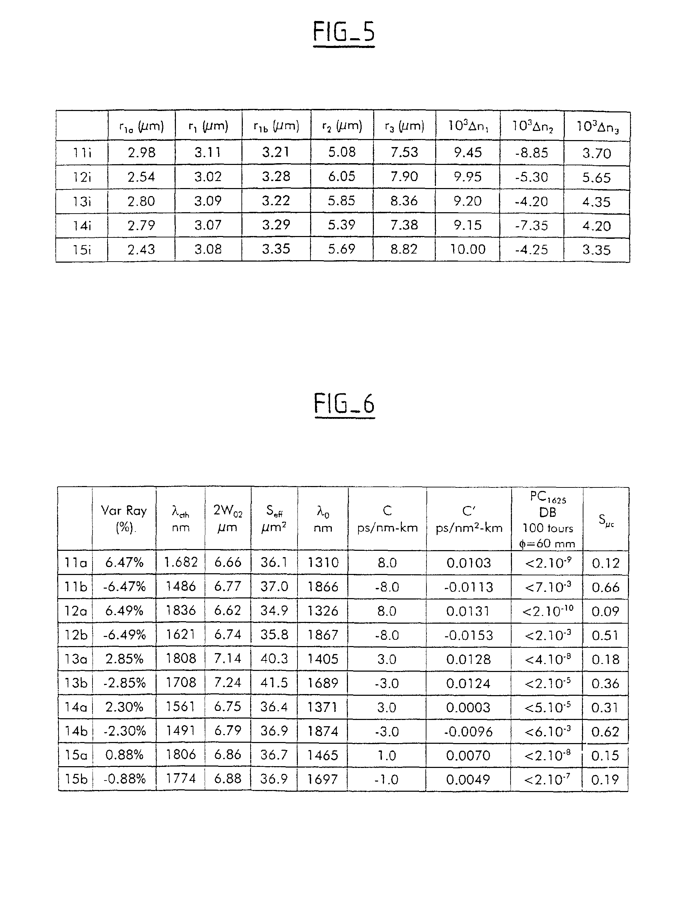

La figure 5 représente un tableau comprenant les valeurs moyennes de rayons et de différences d'indice pour cinq exemples supplémentaires de profils du premier type de fibre optique à gestion de dispersion selon l'invention. Sa description est analogue à celle de la figure 3.

La figure 6 représente un tableau comprenant les variations relatives extrêmes des rayons par rapport à leurs valeurs moyennes de la figure 5 et certaines propriétés des profils correspondants de fibre optique à gestion de dispersion selon l'invention. Sa description est analogue à celle de la figure 4.

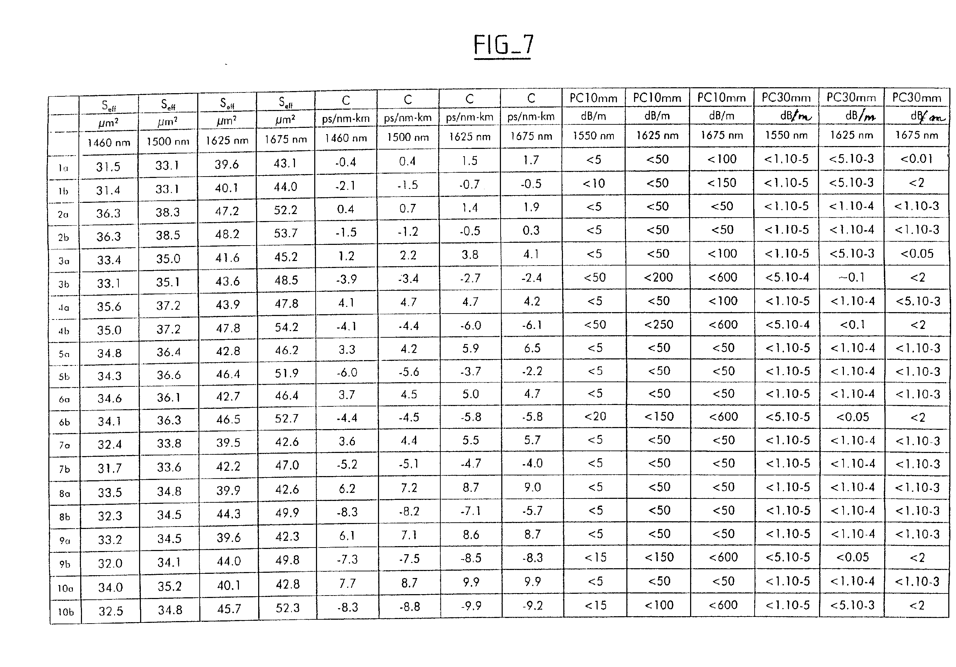

La figure 7 représente un tableau comprenant d'autres propriétés des profils de fibre optique à gestion de dispersion selon l'invention définis à la figure 4. La colonne de gauche comprend la dénomination des exemples déjà expliquée ci-dessus. Pour chaque exemple considéré, les autres colonnes représentent des propriétés de la portion de fibre optique correspondant à l'exemple considéré. Les quatre colonnes suivantes représentent des surfaces effectives $S_{eff}$ exprimées en $\mu m^2$ respectivement aux longueurs d'onde de 1460nm, 1500nm, 1625nm et 1675nm. Les quatre colonnes suivantes représentent des dispersions chromatiques C exprimées en ps/nm.km respectivement aux longueurs d'onde de 1460nm, 1500nm, 1625nm et 1675nm. Les trois colonnes suivantes représentent des seuils maximum de pertes par courbure exprimées en dB/m pour un rayon de 10mm respectivement aux longueurs d'onde de 1500nm, 1625nm et 1675nm. Par exemple, pour l'exemple 1a, lesdites pertes par courbure sont inférieures à 5dB/m. Les trois colonnes suivantes représentent des seuils maximum de pertes par courbure exprimées en dB/m pour un rayon de 30mm respectivement aux longueurs d'onde de 1500nm, 1625nm et 1675nm.

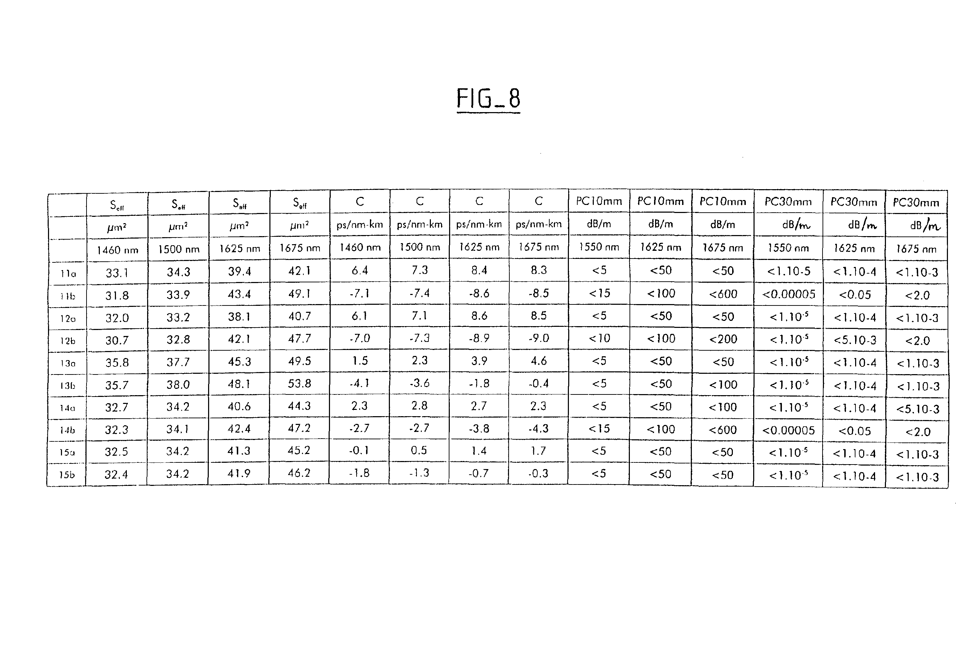

La figure 8 représente un tableau comprenant d'autres propriétés des profils de fibre optique à gestion de dispersion selon l'invention définis à la figure 6. Sa description est analogue à celle de la figure 7.

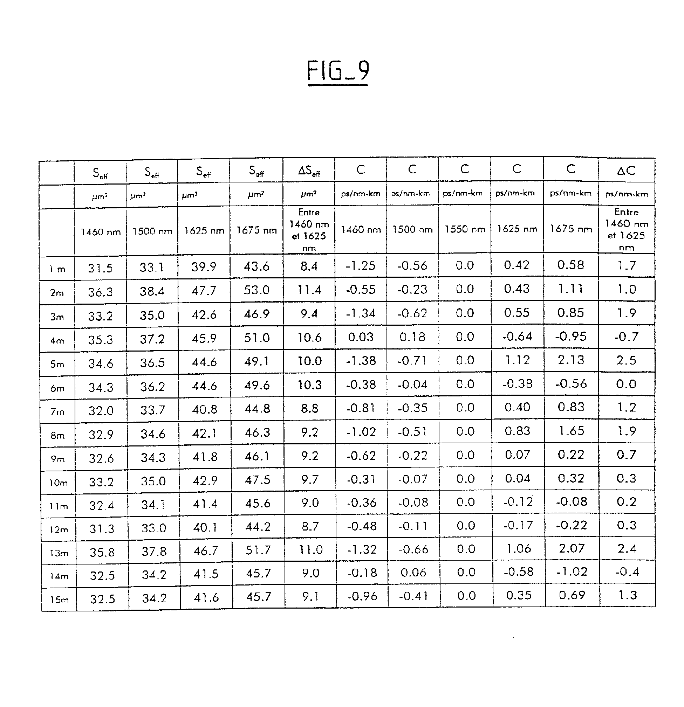

La figure 9 représente un tableau comprenant des moyennes des propriétés des profils de fibre optique à gestion de dispersion selon l'invention définis aux figures 7 et 8. La colonne de gauche représente les exemples du n°1 au n°15. L'indice m signifie que les propriétés représentées dans les autres colonnes correspondent à des moyennes réalisées entre les portions T+ et T-ayant le même numéro d'exemple mais avec des indices a et b. Par exemple les propriétés de l'exemple 1 m sont la moyenne des propriétés des exemples 1a et 1 b. Pour chaque exemple considéré, les autres colonnes représentent des propriétés de la portion de fibre optique correspondant à l'exemple considéré. Les quatre colonnes suivantes représentent des surfaces effectives $S_{eff}$ exprimées en $\mu m^2$ respectivement aux longueurs d'onde de 1460nm, 1500nm, 1625nm et 1675nm. La colonne suivante représente la différence de surface effective $\Delta S_{eff}$ exprimée en $\mu m^2$ entre les longueurs d'onde 1460nm et 1625nm. Les quatre colonnes suivantes représentent des dispersions chromatiques C exprimées en ps/nm.km respectivement aux longueurs d'onde de 1460nm, 1500nm, 1625nm et 1675nm. La dernière colonne représente la différence de dispersion chromatique $\Delta C$ exprimée en ps/nm.km entre les longueurs d'onde 1460nm et 1625nm.

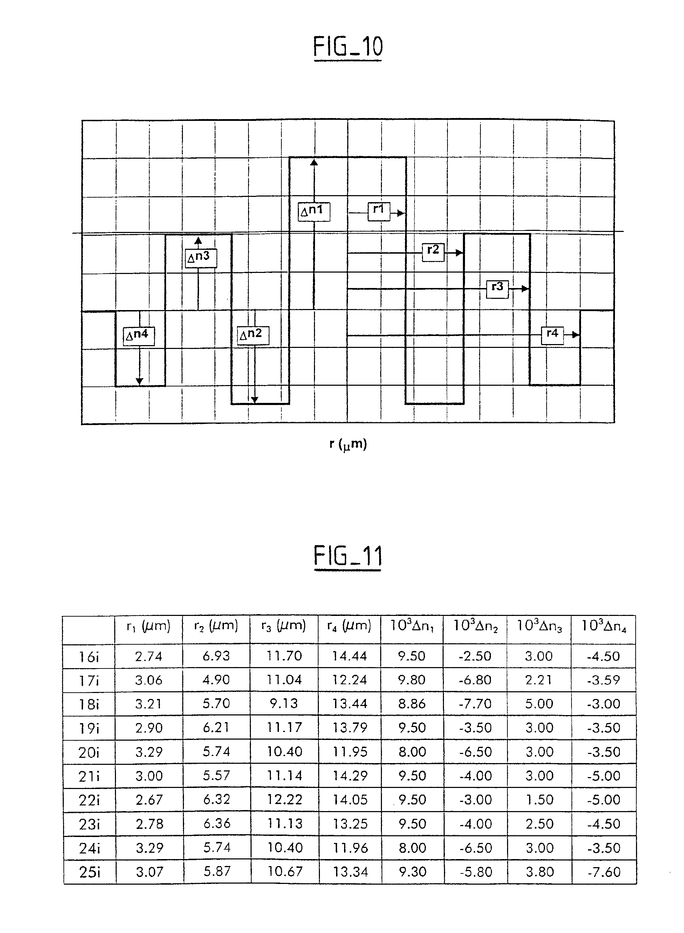

La figure 10 représente schématiquement un deuxième type de profil à quatre tranches d'une fibre optique à gestion de dispersion selon l'invention. La première tranche appelée tranche centrale présente une différence maximale d'indice $\Delta n1$ avec l'indice constant de la gaine et un rayon extérieur r1. La différence d'indice maximale $\Delta n1$ est positive. De préférence, entre un rayon nul et le rayon r1, l'indice est constant. La deuxième tranche appelée première tranche enterrée présente une différence maximale d'indice $\Delta n2$ avec l'indice constant de la gaine et un rayon extérieur r2. La différence d'indice maximale $\Delta n2$ est négative. De préférence, entre le rayon r1 et le rayon r2, l'indice est constant. La troisième tranche appelée tranche annulaire présente une différence maximale d'indice $\Delta n3$ avec l'indice constant de la gaine et un rayon extérieur r3. La différence d'indice maximale $\Delta n3$ est positive. De préférence, entre le rayon r2 et le rayon r3, l'indice est constant. La quatrième tranche appelée deuxième tranche enterrée présente une différence maximale d'indice $\Delta n4$ avec l'indice constant de la gaine et un rayon extérieur r4. La différence d'indice maximale $\Delta n4$ est négative. De préférence, entre le rayon r3 et le rayon r4, l'indice est constant. Au delà du rayon r4 se trouve la gaine d'indice constant.

La figure 11 représente un tableau comprenant les valeurs moyennes de rayons et de différences d'indice pour une dizaine d'exemples de profils du deuxième type de fibre optique à gestion de dispersion selon l'invention. Sa description est analogue à celle de la figure 3.

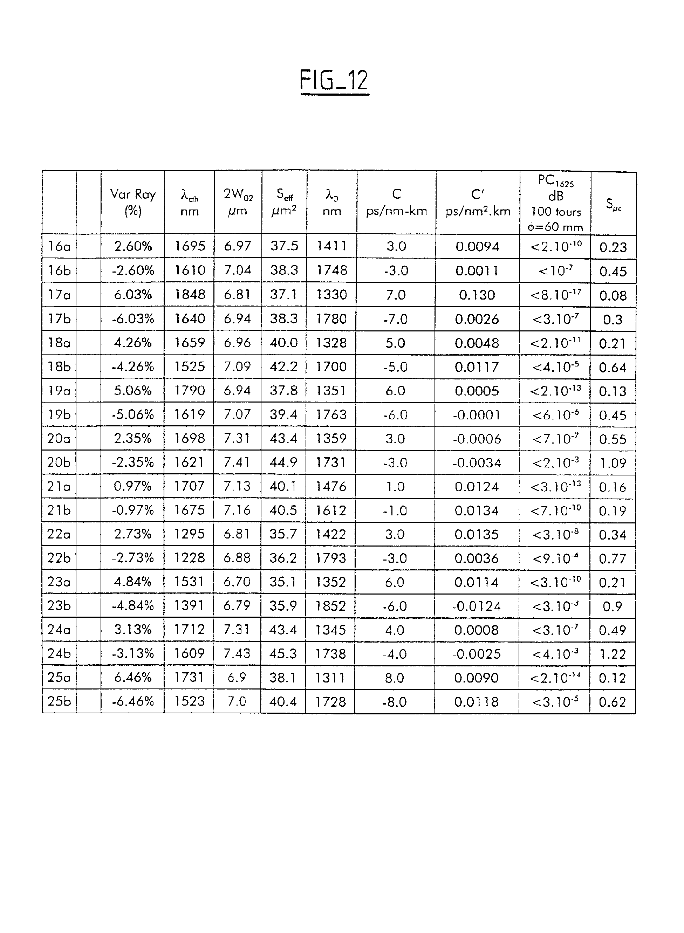

La figure 12 représente un tableau comprenant les variations relatives extrêmes des rayons par rapport à leurs valeurs moyennes de la figure 11 et certaines propriétés des profils correspondants de fibre optique à gestion de dispersion selon l'invention. Sa description est analogue à celle de la figure 4.

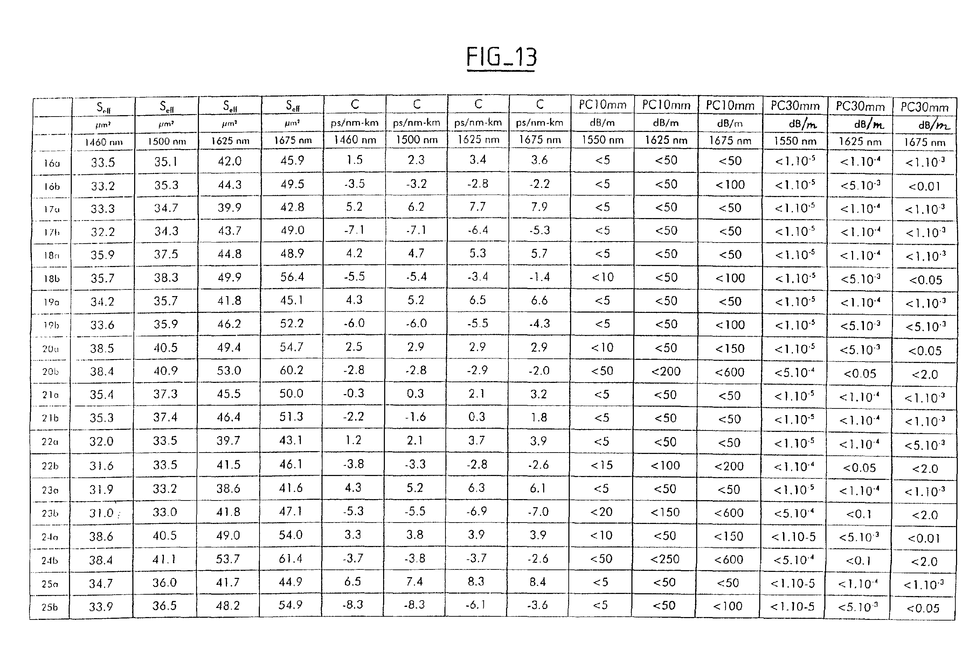

La figure 13 représente un tableau comprenant d'autres propriétés des profils de fibre optique à gestion de dispersion selon l'invention définis à la figure 12. Sa description est analogue à celle de la figure 7.

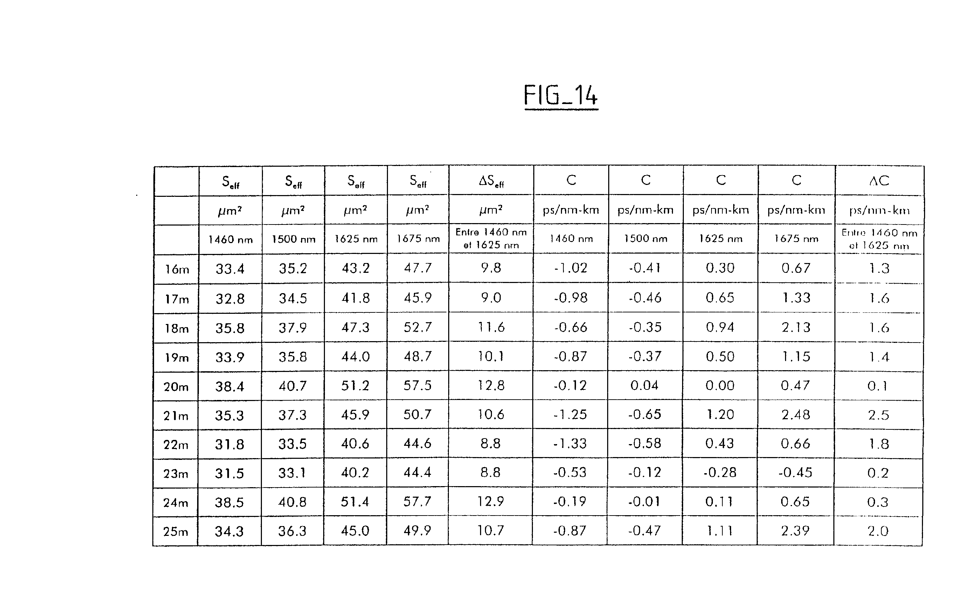

La figure 14 représente un tableau comprenant des moyennes des propriétés des profils de fibre optique à gestion de dispersion selon l'invention définis à la figure 13. Sa description est analogue à celle de la figure 9.

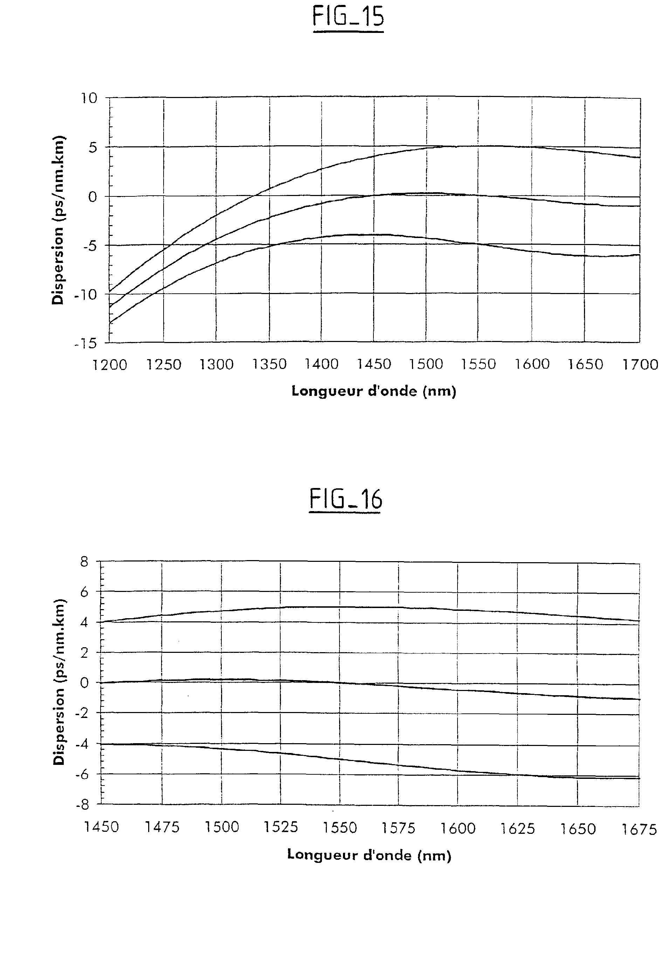

La figure 15 représente schématiquement, sur une large plage spectrale, les variations de dispersion chormatique, positive, moyenne et négative, de l'exemple n°4 défini aux figures 3 et 4. Les courbes a, m et b représentent les disperstions chromatiques exprimées en ps/nm.km sur une plage spectrale de longueurs d'onde allant de 1200nm à 1700nm, respectivement pour les portions T+, pour les portions T- et pour la moyenne entre les portions T+ et T-correspondant à la dispersion chromatique globale de la fibre optique 1 comprenant une alternance de portions T+ et T-. L'exemple considéré sur la figure 15 est l'exemple n°4.

La figure 16 représente schématiquement, sur une plage spectrale plus étroite, un agrandissement de la figure 15. Les mêmes courbes que sur la figure 15 sont représentées sur une plage spectrale plus étroite comprise entre 1450nm et 1675nm. On constate que la pente de la dispersion chromatique de la fibre optique à gestion de dispersion obtenue est « plate » (courbe m) ; la dispersion chromatique reste en effet confinée sur la figure 16 entre 0.5ps/nm.km et -1ps/nm.km.

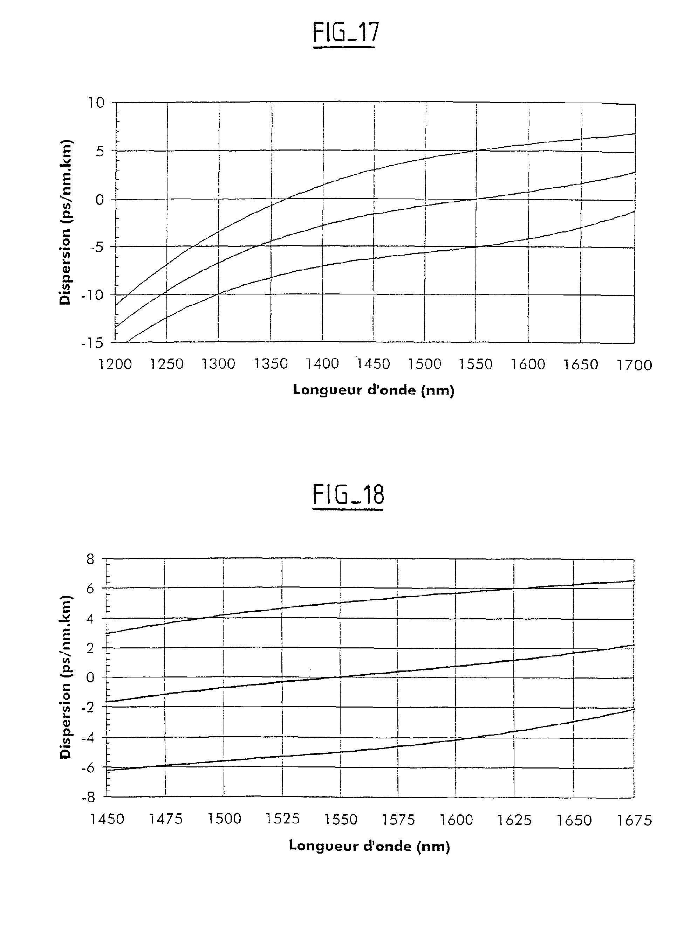

La figure 17 représente schématiquement, sur une large plage spectrale, les variations de dispersion chormatique, positive, moyenne et négative, de l'exemple n°5 défini aux figures 3 et 4. Sa description est analogue à celle de la figure 15.

La figure 18 représente schématiquement, sur une plage spectrale plus étroite, un agrandissement d'une partie de la figure 17. Sa description est analogue à celle de la figure 16.

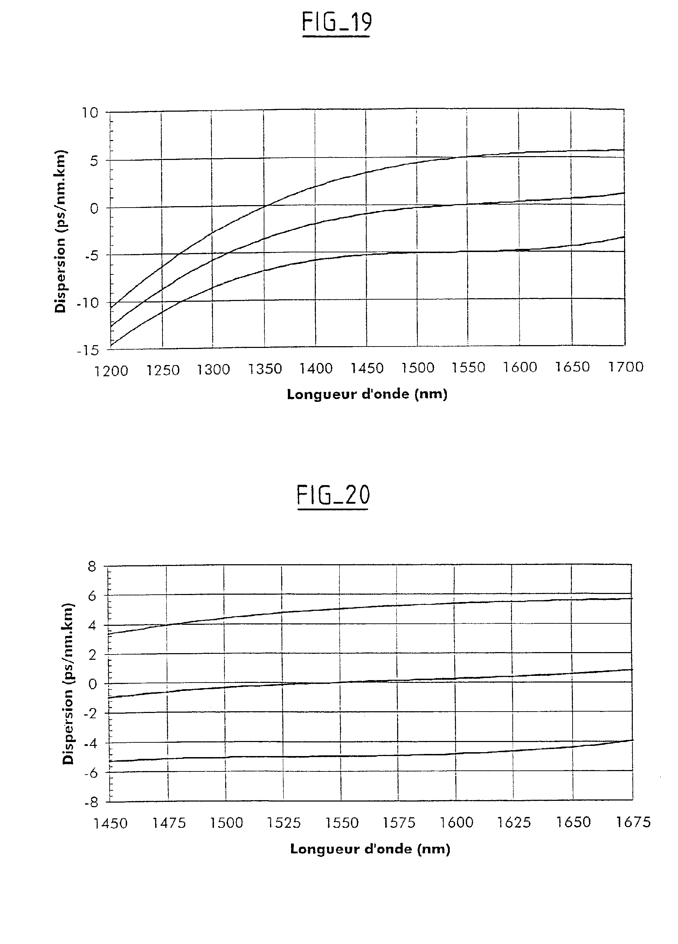

La figure 19 représente schématiquement, sur une large plage spectrale, les variations de dispersion chormatique, positive, moyenne et négative, de l'exemple n°7 défini aux figures 3 et 4. Sa description est analogue à celle de la figure 15.

La figure 20 représente schématiquement, sur une plage spectrale plus étroite, un agrandissement d'une partie de la figure 19. Sa description est analogue à celle de la figure 16.

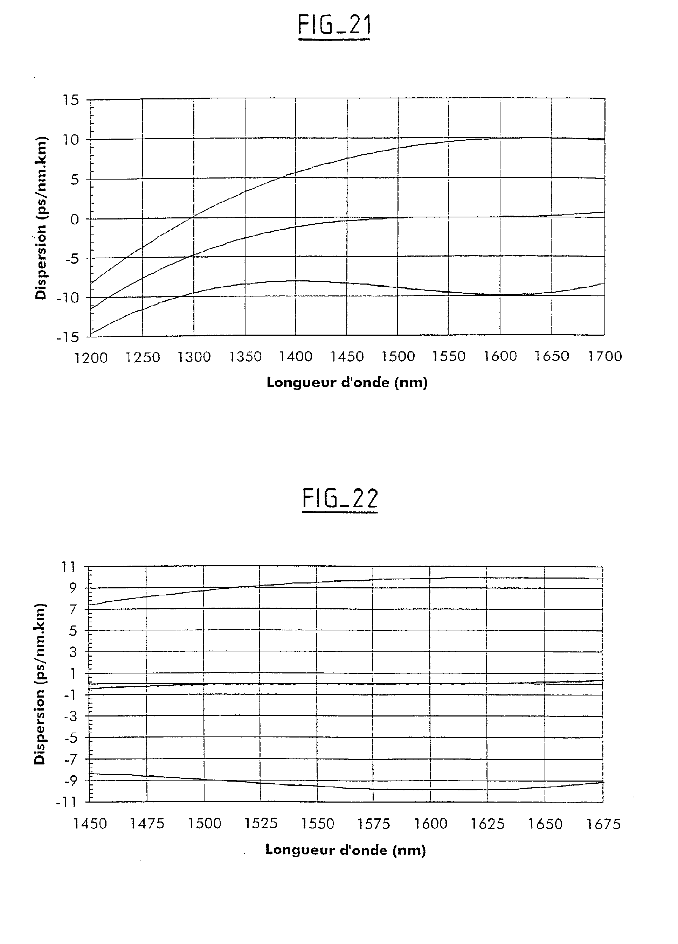

La figure 21 représente schématiquement, sur une large plage spectrale, les variations de dispersion chormatique, positive, moyenne et négative, de l'exemple n°10 défini aux figures 3 et 4. Sa description est analogue à celle de la figure 15.

La figure 22 représente schématiquement, sur une plage spectrale plus étroite, un agrandissement d'une partie de la figure 21. Sa description est analogue à celle de la figure 16.

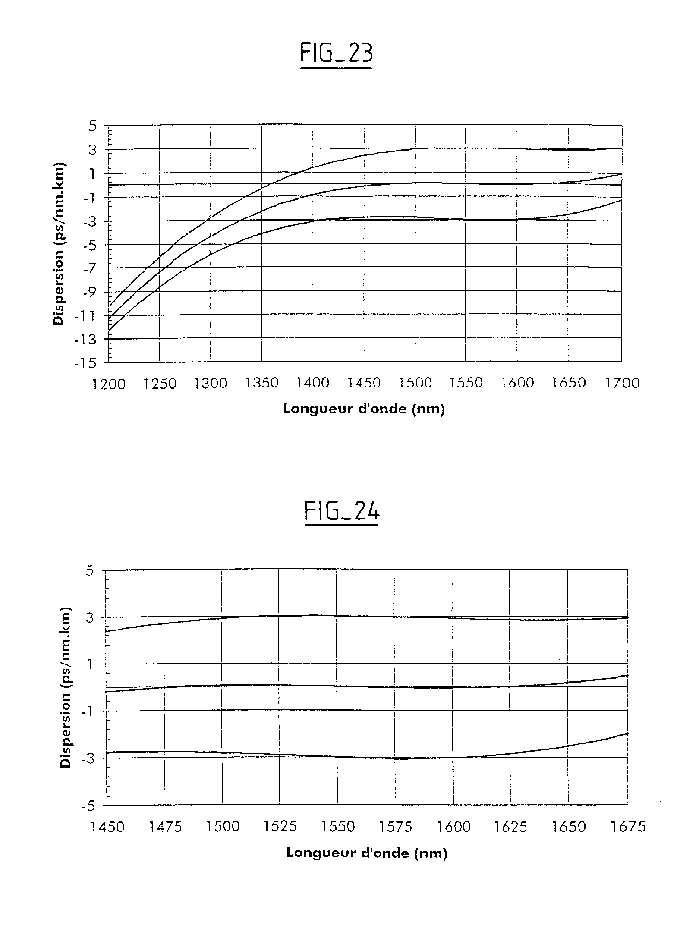

La figure 23 représente schématiquement, sur une large plage spectrale, les variations de dispersion chormatique, positive, moyenne et négative, de l'exemple n°20 défini aux figures 11 et 12. Sa description est analogue à celle de la figure 15.

La figure 24 représente schématiquement, sur une plage spectrale plus étroite, un agrandissement d'une partie de la figure 23. Sa description est analogue à celle de la figure 16.

De préférence la fibre optique à gestion de dispersion selon l'invention présente, à une longueur d'onde de 1550nm, une atténuation inférieure ou égale à 0,35dB/km.

De préférence la fibre optique à gestion de dispersion selon l'invention présente, à une longueur d'onde de 1550nm, une dispersion modale de polarisation inférieure ou égale à $0,2ps/km^{1/2}$, et de préférence inférieure ou égale à $0,1ps/km^{1/2}$, voire inférieure ou égale à $0,05ps/km^{1/2}$.

De préférence la fibre optique à gestion de dispersion selon l'invention présente, à une longueur d'onde de 1625nm, des pertes par courbure mesurées pour un rayon de 10mm inférieures à 400dB/m pour l'une des quelconques portions constituant ladite fibre optique.

## Revendications

1. Fibre optique à gestion de dispersion,

   pour réseau de transmission à multiplexage en longueur d'onde,

   comportant des portions (T+) de fibre optique à dispersion chromatique positive alternant longitudinalement avec des portions (T-) de fibre optique à dispersion chromatique négative,

   comportant successivement du centre vers la périphérie un coeur présentant un profil d'indice variable puis une gaine d'indice constant,

   le rayon extérieur du profil d'indice du coeur, limite entre le coeur et la gaine, étant suffisamment faible pour que la fibre optique soit monomode en câble,

   chaque portion (T+, T-) de fibre optique présentant à la longueur d'onde de 1550nm, une dispersion chromatique dont la valeur absolue est comprise entre 1ps/nm.km et 10ps/nm.km, une pente de dispersion chromatique dont la valeur absolue est inférieure à $0,015ps/nm^2.km$ et une surface effective supérieure à $35\mu m^2$,

   la différence relative de surface effective, à la longueur d'onde de 1550nm, entre les portions (T+) de fibre optique à dispersion chromatique positive et les portions (T-) de fibre optique à dispersion chromatique négative, étant inférieure à 7%,

   chaque portion (T+, T-) de fibre optique, pour une longueur d'onde de 1625nm, présentant des pertes par courbure pour 100 tours pour un diamètre de 60mm inférieures à 0,1dB.

2. Fibre optique à gestion de dispersion selon la revendication 1, **caractérisée en ce que** la moyenne, sur l'ensemble des portions (T+,T-) de fibre optique, du rayon extérieur ($r_3$) du profil d'indice du coeur, limite entre le coeur et la gaine, est inférieur à 10,5µm et **en ce que** le profil d'indice du coeur est constitué de trois tranches.

3. Fibre optique à gestion de dispersion selon la revendication 2, **caractérisée en ce que** le profil d'indice variable du coeur est successivement constitué, du centre vers la périphérie,

   d'une tranche centrale d'indice maximum supérieur à l'indice de la gaine,

   d'une tranche enterrée d'indice minimum inférieur à l'indice de la gaine,

   d'une tranche annulaire d'indice maximum supérieur à l'indice de la gaine et inférieur à l'indice maximum de la tranche centrale.

4. Fibre optique à gestion de dispersion selon la revendication 3, **caractérisée en ce que** la tranche centrale est en forme de trapèze ou en alpha.

5. Fibre optique à gestion de dispersion selon l'une quelconque des revendications 3 à 4,

   **caractérisée en ce que** la moyenne, sur l'ensemble des portions (T+, T-) de fibre optique, de la différence ($\Delta n_1$) entre l'indice maximum de la tranche centrale et l'indice de la gaine, est comprise entre $7,00.10^{-3}$ et $11,0.10^{-3}$,

   et **en ce que** la moyenne, sur l'ensemble des portions (T+, T-) de fibre optique, du rayon ($r_1$) de la partie de la tranche centrale présentant un indice supérieur à l'indice de la gaine, est comprise entre 2,65µm et 3,70µm.

6. Fibre optique à gestion de dispersion selon la revendication 5, **caractérisée en ce que**, pour une portion moyenne de fibre optique dont les valeurs de rayon du profil d'indice correspondraient aux moyennes des valeurs de rayon des profils d'indice de l'ensemble des portions (T+, T-) de fibre optique, la valeur de l'intégrale

$$\left( S_{01} = \int_0^{r1} \Delta n(r).dr \right)$$

, entre un rayon nul et le rayon ($r_1$) de la partie de la tranche centrale présentant un indice supérieur à l'indice de la gaine, de la différence d'indice par rapport à l'indice de la gaine, est supérieure à $23,0.10^{-3}$ µm.

7. Fibre optique à gestion de dispersion selon l'une quelconque des revendications 5 à 6, **caractérisée en ce que**, pour une portion moyenne de fibre optique dont les valeurs de rayon du profil d'indice correspondraient aux moyennes des valeurs de rayon des profils d'indice de l'ensemble des portions (T+, T-) de fibre optique, la valeur du double de l'intégrale

$$\left( S_1 = 2.\int_0^{r1} \Delta n(r).r.dr \right),$$

entre un rayon nul et le rayon ($r_1$) de la partie de la tranche centrale présentant un indice supérieur à l'indice de la gaine, du produit du rayon par la différence d'indice par rapport à la gaine, est comprise entre $58.10^{-3}$ et $99.10^{-3}$µm$^2$.

8. Fibre optique à gestion de dispersion selon l'une quelconque des revendications 5 à 7, **caractérisée en ce que**, pour une portion moyenne de fibre optique dont les valeurs de rayon du profil d'indice correspondraient aux moyennes des valeurs de rayon des profils d'indice de l'ensemble des portions (T+, T-) de fibre optique, la valeur du triple de l'intégrale

$$\left( S_{11} = 3.\int_0^{r1} \Delta n(r).r^2.dr \right),$$

entre un rayon nul et le rayon ($r_1$) de la partie de la tranche centrale présentant un indice supérieur à l'indice de la gaine, du produit du carré du rayon par la différence d'indice par rapport à l'indice de la gaine, est comprise entre $150.10^{-3}$ µm$^3$ et $335.10^{-3}$ µm$^3$.

9. Fibre optique à gestion de dispersion selon l'une quelconque des revendications 3 à 8,

**caractérisée en ce que** la moyenne, sur l'ensemble des portions (T+, T-) de fibre optique, de la différence ($\Delta n_2$) entre l'indice minimum de la tranche enterrée et l'indice de la gaine, est comprise entre $-9,0.10^{-3}$ et $-2,5.10^{-3}$,

et **en ce que** la moyenne, sur l'ensemble des portions (T+, T-) de fibre optique, du rayon extérieur ($r_2$) de la tranche enterrée, est comprise entre 4,00µm et 8,10µm.

10. Fibre optique à gestion de dispersion selon la revendication 9, **caractérisée en ce que**, pour une portion moyenne de fibre optique dont les valeurs de rayon du profil d'indice correspondraient aux moyennes des valeurs de rayon des profils d'indice de l'ensemble des portions (T+, T-) de fibre optique, la valeur de l'intégrale

$$\left( S_{02} = \int_{r1}^{r2} \Delta n(r).dr \right)$$

entre le rayon ($r_1$) de la partie de la tranche centrale présentant un indice supérieur à l'indice de la gaine et le rayon extérieur ($r_2$) de la tranche enterrée, de la différence d'indice par rapport à l'indice de la gaine, est comprise entre $-22,0.10^{-3}$ µm et $-8,0.10^{-3}$ µm.

11. Fibre optique à gestion de dispersion selon l'une quelconque des revendications 3 à 10,

**caractérisée en ce que** la moyenne, sur l'ensemble des portions (T+, T-) de fibre optique, de la différence ($\Delta n_3$) entre l'indice maximum de la tranche annulaire et l'indice de la gaine, est comprise entre $0,50.10^{-3}$ et $7,5.10^{-3}$,

et **en ce que** la moyenne, sur l'ensemble des portions (T+, T-) de fibre optique, du rayon extérieur ($r_3$) de la tranche annulaire, est comprise entre 6,70µm et 10,50µm.

12. Fibre optique à gestion de dispersion selon la revendication 11, **caractérisée en ce que**, pour une portion moyenne de fibre optique dont les valeurs de rayon du profil d'indice correspondraient aux moyennes des valeurs de rayon des profils d'indice de l'ensemble des portions (T+, T-) de fibre optique, la valeur de l'intégrale

$$\left( S_{03} = \int_{r2}^{r3} \Delta n(r).dr \right)$$

entre le rayon extérieur ($r_2$) de la tranche enterrée et le rayon extérieur ($r_3$) de la tranche annulaire, de la différence d'indice par rapport à l'indice de la gaine, est comprise entre $1,0.10^{-3}$µm et $15.10^{-3}$µm.

**13.** Fibre optique à gestion de dispersion selon la revendication 1, **caractérisée en ce que** la moyenne, sur l'ensemble des portions (T+,T-) de fibre optique, du rayon extérieur ($r_4$) du profil d'indice du coeur, limite entre le coeur et la gaine, est inférieur à 16µm et **en ce que** le profil d'indice du coeur est constitué de quatre tranches.

**14.** Fibre optique à gestion de dispersion selon la revendication 13, **caractérisée en ce que** le profil d'indice variable du coeur est successivement constitué, du centre vers la périphérie,

d'une tranche centrale d'indice maximum supérieur à l'indice de la gaine,

d'une première tranche enterrée d'indice minimum inférieur à l'indice de la gaine,

d'une tranche annulaire d'indice maximum supérieur à l'indice de la gaine et inférieur à l'indice maximum de la tranche centrale,

d'une deuxième tranche enterrée d'indice minimum inférieur à l'indice de la gaine.

**15.** Fibre optique à gestion de dispersion selon la revendication 14,

**caractérisée en ce que** la moyenne, sur l'ensemble des portions (T+, T-) de fibre optique, de la différence ($\Delta n_1$) entre l'indice maximum de la tranche centrale et l'indice de la gaine, est comprise entre $7{,}0.10^{-3}$ et $10{,}0.10^{-3}$,

et **en ce que** la moyenne, sur l'ensemble des portions (T+, T-) de fibre optique, du rayon ($r_1$) de la partie de la tranche centrale présentant un indice supérieur à l'indice de la gaine, est comprise entre 2,5µm et 3,5µm.

**16.** Fibre optique à gestion de dispersion selon l'une quelconque des revendications 14 à 15,

**caractérisée en ce que** la moyenne, sur l'ensemble des portions (T+, T-) de fibre optique, de la différence ($\Delta n_2$) entre l'indice minimum de la première tranche enterrée et l'indice de la gaine, est comprise entre $-9{,}0.10^{-3}$ et $-2{,}5.10^{-3}$,

et **en ce que** la moyenne, sur l'ensemble des portions (T+, T-) de fibre optique, du rayon extérieur ($r_2$) de la tranche enterrée, est comprise entre 4,1µm et 7,0µm.

**17.** Fibre optique à gestion de dispersion selon l'une quelconque des revendications 14 à 16,

**caractérisée en ce que** la moyenne, sur l'ensemble des portions (T+, T-) de fibre optique, de la différence ($\Delta n_3$) entre l'indice maximum de la tranche annulaire et l'indice de la gaine, est comprise entre $0{,}5.10^{-3}$ et $5{,}0.10^{-3}$,

et **en ce que** la moyenne, sur l'ensemble des portions (T+, T-) de fibre optique, du rayon extérieur ($r_3$) de la tranche annulaire, est comprise entre 9,0µm et 13,0µm.

**18.** Fibre optique à gestion de dispersion selon l'une quelconque des revendications 14 à 17,

**caractérisée en ce que** la moyenne, sur l'ensemble des portions (T+, T-) de fibre optique, de la différence ($\Delta n_4$) entre l'indice minimum de la deuxième tranche enterrée et l'indice de la gaine, est comprise entre $-9{,}0.10^{-3}$ et $-2{,}0.10^{-3}$,

et **en ce que** la moyenne, sur l'ensemble des portions (T+, T-) de fibre optique, du rayon extérieur ($r_4$) de la deuxième tranche enterrée, est comprise entre 12,0µm et 16,0µm.

**19.** Fibre optique à gestion de dispersion selon l'une quelconque des revendications précédentes, **caractérisée en ce que** ladite fibre optique à gestion de dispersion est obtenue, par tirage, à partir de la modification des propriétés d'une seule et même préforme.

**20.** Fibre optique à gestion de dispersion selon l'une quelconque des revendications précédentes, **caractérisée en ce que** la différence relative de rayon extérieur, entre les portions de fibre optique à dispersion chromatique positive et les portions de fibre optique à dispersion chromatique négative, est choisie inférieure à 11%.

**21.** Fibre optique à gestion de dispersion selon l'une quelconque des revendications précédentes, **caractérisée en ce que** la fibre optique présente, à une longueur d'onde de 1550nm, une atténuation inférieure ou égale à 0,35dB/km.

**22.** Fibre optique à gestion de dispersion selon l'une quelconque des revendications précédentes, **caractérisée en ce que** la fibre optique présente, à une longueur d'onde de 1550nm, une dispersion modale de polarisation inférieure ou égale à 0,2ps/$km^{1/2}$, et de préférence inférieure ou égale à 0.1ps/$km^{1/2}$, voire inférieure ou égale à 0,05ps/$km^{1/2}$.

**23.** Fibre optique à gestion de dispersion selon l'une quelconque des revendications précédentes, **caractérisée en ce que** la fibre optique présente, à une longueur d'onde de 1625nm, des pertes par courbure mesurées pour un rayon de 10mm inférieures à 400dB/m pour l'une des quelconques portions constituant ladite fibre optique.

FIG_1

11
12
13
14
1
T+
T-
T+
T-

FIG_2

Δn1
r1a
r1
r2
r3
Δn3
r1b
Δn2
r (μm)

FIG_3

| | $r_{1a}$ (μm) | $r_1$ (μm) | $r_{1b}$ (μm) | $r_2$ (μm) | $r_3$ (μm) | $10^3\Delta n_1$ | $10^3\Delta n_2$ | $10^3\Delta n_3$ |
|---|---|---|---|---|---|---|---|---|
| 1i | 2.81 | 2.81 | 2.81 | 5.27 | 7.03 | 9.50 | -5.00 | 2.50 |
| 2i | 3.19 | 3.19 | 3.19 | 5.74 | 7.98 | 9.00 | -6.50 | 6.00 |
| 3i | 2.85 | 2.85 | 2.85 | 5.56 | 7.12 | 9.00 | -4.50 | 3.00 |
| 4i | 3.19 | 3.19 | 3.19 | 5.32 | 8.86 | 8.50 | -7.50 | 2.50 |
| 5i | 3.05 | 3.05 | 3.05 | 5.09 | 8.49 | 9.50 | -6.00 | 3.00 |
| 6i | 2.94 | 2.94 | 2.94 | 6.33 | 9.17 | 9.00 | -4.00 | 3.50 |
| 7i | 2.96 | 2.96 | 2.96 | 5.56 | 7.41 | 10.00 | -6.00 | 6.00 |
| 8i | 3.09 | 3.09 | 3.09 | 5.10 | 7.73 | 10.00 | -8.00 | 4.50 |
| 9i | 2.96 | 2.96 | 2.96 | 5.67 | 8.22 | 9.50 | -5.50 | 3.50 |
| 10i | 3.12 | 3.12 | 3.12 | 5.62 | 7.80 | 9.50 | -7.50 | 5.50 |

FIG_4

| | Var Ray (%) | $\lambda_{cth}$ nm | $2W_{02}$ μm | $S_{eff}$ μm² | $\lambda_0$ nm | C ps/nm-km | C' ps/nm²-km | $PC_{1625}$ dB 100 tours ϕ=60 mm | $S_{\mu c}$ |
|---|---|---|---|---|---|---|---|---|---|
| 1a | 0.91% | 1146 | 6.74 | 35.4 | 1478 | 1.0 | 0.0100 | $<3.10^{-4}$ | 0.37 |
| 1b | -0.91% | 1018 | 6.76 | 35.5 | 1764 | -1.0 | 0.0071 | $< 2.10^{-3}$ | 0.48 |
| 2a | 0.85% | 1808 | 7.11 | 41.3 | 1434 | 1.0 | 0.0040 | $< 3.10^{-7}$ | 0.23 |
| 2b | -0.85% | 1778 | 7.14 | 41.7 | 1662 | -1.0 | 0.0037 | $<2.10^{-6}$ | 0.29 |
| 3a | 2.78% | 1051 | 6.92 | 37.4 | 1416 | 3.0 | 0.0139 | $<5.10^{-4}$ | 0.43 |
| 3b | -2.78% | 996 | 7.00 | 38.0 | 1815 | -3.0 | 0.0060 | $<9.10^{-2}$ | 1.00 |
| 4a | 3.73% | 1727 | 7.00 | 39.5 | 1336 | 5.0 | 0.0015 | $<6.10^{-5}$ | 0.35 |
| 4b | -3.73% | 1604 | 7.10 | 40.7 | 1835 | -5.0 | -0.0142 | $<8.10^{-2}$ | 1.04 |
| 5a | 4.75% | 1801 | 6.96 | 38.7 | 1364 | 5.0 | 0.0148 | $<2.10^{-10}$ | 0.11 |
| 5b | -4.75% | 1639 | 7.10 | 40.0 | 1726 | -5.0 | 0.0133 | $<10^{-7}$ | 0.33 |
| 6a | 3.90% | 1849 | 6.98 | 38.4 | 1357 | 5.0 | 0.0064 | $<4.10^{-6}$ | 0.25 |
| 6b | -3.90% | 1711 | 7.09 | 39.6 | 1828 | -5.0 | -0.0118 | $<9.10^{-3}$ | 0.74 |
| 7a | 4.31% | 1774 | 6.69 | 35.8 | 1352 | 5.0 | 0.0096 | $<6.10^{-11}$ | 0.09 |
| 7b | -4.31% | 1628 | 6.77 | 36.6 | 1787 | -5.0 | 0.0020 | $<3.10^{-6}$ | 0.26 |
| 8a | 6.90% | 1851 | 6.71 | 36.6 | 1314 | 8.0 | 0.0137 | $<9.10^{-14}$ | 0.06 |
| 8b | -6.90% | 1614 | 6.84 | 37.8 | 1785 | -8.0 | 0.0061 | $<5.10^{-6}$ | 0.29 |
| 9a | 6.60% | 1773 | 6.74 | 36.3 | 1321 | 8.0 | 0.0140 | $<3.10^{-9}$ | 0.13 |
| 9b | -6.60% | 1561 | 6.87 | 37.4 | 1853 | -8.0 | -0.0100 | $<9.^{10-3}$ | 0.70 |
| 10a | 6.80 % | 1866 | 6.73 | 37.1 | 1298 | 9.5 | 0.0116 | $<7.10^{-11}$ | 0.27 |
| 10b | -6.80% | 1615 | 6.87 | 38.6 | 1833 | -9.5 | -0.0108 | $<3.^{10-3}$ | 0.60 |

FIG_5

| | $r_{1a}$ (μm) | $r_1$ (μm) | $r_{1b}$ (μm) | $r_2$ (μm) | $r_3$ (μm) | $10^3\Delta n_1$ | $10^3\Delta n_2$ | $10^3\Delta n_3$ |
|---|---|---|---|---|---|---|---|---|
| 11i | 2.98 | 3.11 | 3.21 | 5.08 | 7.53 | 9.45 | -8.85 | 3.70 |
| 12i | 2.54 | 3.02 | 3.28 | 6.05 | 7.90 | 9.95 | -5.30 | 5.65 |
| 13i | 2.80 | 3.09 | 3.22 | 5.85 | 8.36 | 9.20 | -4.20 | 4.35 |
| 14i | 2.79 | 3.07 | 3.29 | 5.39 | 7.38 | 9.15 | -7.35 | 4.20 |
| 15i | 2.43 | 3.08 | 3.35 | 5.69 | 8.82 | 10.00 | -4.25 | 3.35 |

FIG_6

| | Var Ray (%). | $\lambda_{cth}$ nm | $2W_{02}$ μm | $S_{eff}$ μm² | $\lambda_0$ nm | C ps/nm-km | C' ps/nm²-km | $PC_{1625}$ DB 100 tours φ=60 mm | $S_{\mu c}$ |
|---|---|---|---|---|---|---|---|---|---|
| 11a | 6.47% | 1.682 | 6.66 | 36.1 | 1310 | 8.0 | 0.0103 | $<2.10^{-9}$ | 0.12 |
| 11b | -6.47% | 1486 | 6.77 | 37.0 | 1866 | -8.0 | -0.0113 | $<7.10^{-3}$ | 0.66 |
| 12a | 6.49% | 1836 | 6.62 | 34.9 | 1326 | 8.0 | 0.0131 | $<2.10^{-10}$ | 0.09 |
| 12b | -6.49% | 1621 | 6.74 | 35.8 | 1867 | -8.0 | -0.0153 | $<2.10^{-3}$ | 0.51 |
| 13a | 2.85% | 1808 | 7.14 | 40.3 | 1405 | 3.0 | 0.0128 | $<4.10^{-8}$ | 0.18 |
| 13b | -2.85% | 1708 | 7.24 | 41.5 | 1689 | -3.0 | 0.0124 | $<2.10^{-5}$ | 0.36 |
| 14a | 2.30% | 1561 | 6.75 | 36.4 | 1371 | 3.0 | 0.0003 | $<5.10^{-5}$ | 0.31 |
| 14b | -2.30% | 1491 | 6.79 | 36.9 | 1874 | -3.0 | -0.0096 | $<6.10^{-3}$ | 0.62 |
| 15a | 0.88% | 1806 | 6.86 | 36.7 | 1465 | 1.0 | 0.0070 | $<2.10^{-8}$ | 0.15 |
| 15b | -0.88% | 1774 | 6.88 | 36.9 | 1697 | -1.0 | 0.0049 | $<2.10^{-7}$ | 0.19 |

FIG_7

| | $S_{eff}$ | $S_{eff}$ | $S_{eff}$ | $S_{eff}$ | C | C | C | C | PC10mm | PC10mm | PC10mm | PC30mm | PC30mm | PC30mm |
|---|---|---|---|---|---|---|---|---|---|---|---|---|---|---|
| | $\mu m^2$ | $\mu m^2$ | $\mu m^2$ | $\mu m^2$ | ps/nm-km | ps/nm-km | ps/nm-km | ps/nm-km | dB/m | dB/m | dB/m | dB/m | dB/m | dB/m |
| | 1460 nm | 1500 nm | 1625 nm | 1675 nm | 1460 nm | 1500 nm | 1625 nm | 1675 nm | 1550 nm | 1625 nm | 1675 nm | 1550 nm | 1625 nm | 1675 nm |
| 1a | 31.5 | 33.1 | 39.6 | 43.1 | -0.4 | 0.4 | 1.5 | 1.7 | <5 | <50 | <100 | <1.10-5 | <5.10-3 | <0.01 |
| 1b | 31.4 | 33.1 | 40.1 | 44.0 | -2.1 | -1.5 | -0.7 | -0.5 | <10 | <50 | <150 | <1.10-5 | <5.10-3 | <2 |
| 2a | 36.3 | 38.3 | 47.2 | 52.2 | 0.4 | 0.7 | 1.4 | 1.9 | <5 | <50 | <50 | <1.10-5 | <1.10-4 | <1.10-3 |
| 2b | 36.3 | 38.5 | 48.2 | 53.7 | -1.5 | -1.2 | -0.5 | 0.3 | <5 | <50 | <50 | <1.10-5 | <1.10-4 | <1.10-3 |
| 3a | 33.4 | 35.0 | 41.6 | 45.2 | 1.2 | 2.2 | 3.8 | 4.1 | <5 | <50 | <100 | <1.10-5 | <5.10-3 | <0.05 |
| 3b | 33.1 | 35.1 | 43.6 | 48.5 | -3.9 | -3.4 | -2.7 | -2.4 | <50 | <200 | <600 | <5.10-4 | ~0.1 | <2 |
| 4a | 35.6 | 37.2 | 43.9 | 47.8 | 4.1 | 4.7 | 4.7 | 4.2 | <5 | <50 | <100 | <1.10-5 | <1.10-4 | <5.10-3 |
| 4b | 35.0 | 37.2 | 47.8 | 54.2 | -4.1 | -4.4 | -6.0 | -6.1 | <50 | <250 | <600 | <5.10-4 | <0.1 | <2 |
| 5a | 34.8 | 36.4 | 42.8 | 46.2 | 3.3 | 4.2 | 5.9 | 6.5 | <5 | <50 | <50 | <1.10-5 | <1.10-4 | <1.10-3 |
| 5b | 34.3 | 36.6 | 46.4 | 51.9 | -6.0 | -5.6 | -3.7 | -2.2 | <5 | <50 | <50 | <1.10-5 | <1.10-4 | <1.10-3 |
| 6a | 34.6 | 36.1 | 42.7 | 46.4 | 3.7 | 4.5 | 5.0 | 4.7 | <5 | <50 | <50 | <1.10-5 | <1.10-4 | <1.10-3 |
| 6b | 34.1 | 36.3 | 46.5 | 52.7 | -4.4 | -4.5 | -5.8 | -5.8 | <20 | <150 | <600 | <5.10-5 | <0.05 | <2 |
| 7a | 32.4 | 33.8 | 39.5 | 42.6 | 3.6 | 4.4 | 5.5 | 5.7 | <5 | <50 | <50 | <1.10-5 | <1.10-4 | <1.10-3 |
| 7b | 31.7 | 33.6 | 42.2 | 47.0 | -5.2 | -5.1 | -4.7 | -4.0 | <5 | <50 | <50 | <1.10-5 | <1.10-4 | <1.10-3 |
| 8a | 33.5 | 34.8 | 39.9 | 42.6 | 6.2 | 7.2 | 8.7 | 9.0 | <5 | <50 | <50 | <1.10-5 | <1.10-4 | <1.10-3 |
| 8b | 32.3 | 34.5 | 44.3 | 49.9 | -8.3 | -8.2 | -7.1 | -5.7 | <5 | <50 | <50 | <1.10-5 | <1.10-4 | <1.10-3 |
| 9a | 33.2 | 34.5 | 39.6 | 42.3 | 6.1 | 7.1 | 8.6 | 8.7 | <5 | <50 | <50 | <1.10-5 | <1.10-4 | <1.10-3 |
| 9b | 32.0 | 34.1 | 44.0 | 49.8 | -7.3 | -7.5 | -8.5 | -8.3 | <15 | <150 | <600 | <5.10-5 | <0.05 | <2 |
| 10a | 34.0 | 35.2 | 40.1 | 42.8 | 7.7 | 8.7 | 9.9 | 9.9 | <5 | <50 | <50 | <1.10-5 | <1.10-4 | <1.10-3 |
| 10b | 32.5 | 34.8 | 45.7 | 52.3 | -8.3 | -8.8 | -9.9 | -9.2 | <15 | <100 | <600 | <1.10-5 | <5.10-3 | <2 |

FIG_8

| | $S_{eff}$ | $S_{eff}$ | $S_{eff}$ | $S_{eff}$ | C | C | C | C | PC10mm | PC10mm | PC10mm | PC30mm | PC30mm | PC30mm |
|---|---|---|---|---|---|---|---|---|---|---|---|---|---|---|
| | $\mu m^2$ | $\mu m^2$ | $\mu m^2$ | $\mu m^2$ | ps/nm-km | ps/nm-km | ps/nm-km | ps/nm-km | dB/m | dB/m | dB/m | dB/m | dB/m | dB/m |
| | 1460 nm | 1500 nm | 1625 nm | 1675 nm | 1460 nm | 1500 nm | 1625 nm | 1675 nm | 1550 nm | 1625 nm | 1675 nm | 1550 nm | 1625 nm | 1675 nm |
| 11a | 33.1 | 34.3 | 39.4 | 42.1 | 6.4 | 7.3 | 8.4 | 8.3 | <5 | <50 | <50 | <1.10-5 | <1.10-4 | <1.10-3 |
| 11b | 31.8 | 33.9 | 43.4 | 49.1 | -7.1 | -7.4 | -8.6 | -8.5 | <15 | <100 | <600 | <0.00005 | <0.05 | <2.0 |
| 12a | 32.0 | 33.2 | 38.1 | 40.7 | 6.1 | 7.1 | 8.6 | 8.5 | <5 | <50 | <50 | $<1.10^{-5}$ | <1.10-4 | <1.10-3 |
| 12b | 30.7 | 32.8 | 42.1 | 47.7 | -7.0 | -7.3 | -8.9 | -9.0 | <10 | <100 | <200 | $<1.10^{-5}$ | <5.10-3 | <2.0 |
| 13a | 35.8 | 37.7 | 45.3 | 49.5 | 1.5 | 2.3 | 3.9 | 4.6 | <5 | <50 | <50 | $<1.10^{-5}$ | <1.10-4 | <1.10-3 |
| 13b | 35.7 | 38.0 | 48.1 | 53.8 | -4.1 | -3.6 | -1.8 | -0.4 | <5 | <50 | <100 | $<1.10^{-5}$ | <1.10-4 | <1.10-3 |
| 14a | 32.7 | 34.2 | 40.6 | 44.3 | 2.3 | 2.8 | 2.7 | 2.3 | <5 | <50 | <100 | $<1.10^{-5}$ | <1.10-4 | <5.10-3 |
| 14b | 32.3 | 34.1 | 42.4 | 47.2 | -2.7 | -2.7 | -3.8 | -4.3 | <15 | <100 | <600 | <0.00005 | <0.05 | <2.0 |
| 15a | 32.5 | 34.2 | 41.3 | 45.2 | -0.1 | 0.5 | 1.4 | 1.7 | <5 | <50 | <50 | $<1.10^{-5}$ | <1.10-4 | <1.10-3 |
| 15b | 32.4 | 34.2 | 41.9 | 46.2 | -1.8 | -1.3 | -0.7 | -0.3 | <5 | <50 | <50 | $<1.10^{-5}$ | <1.10-4 | <1.10-3 |

FIG_9

| | $S_{eff}$ | $S_{eff}$ | $S_{eff}$ | $S_{eff}$ | $\Delta S_{eff}$ | C | C | C | C | C | $\Delta C$ |
|---|---|---|---|---|---|---|---|---|---|---|---|
| | $\mu m^2$ | $\mu m^2$ | $\mu m^2$ | $\mu m^2$ | $\mu m^2$ | ps/nm-km | ps/nm-km | ps/nm-km | ps/nm-km | ps/nm-km | ps/nm-km |
| | 1460 nm | 1500 nm | 1625 nm | 1675 nm | Entre 1460 nm et 1625 nm | 1460 nm | 1500 nm | 1550 nm | 1625 nm | 1675 nm | Entre 1460 nm et 1625 nm |
| 1 m | 31.5 | 33.1 | 39.9 | 43.6 | 8.4 | -1.25 | -0.56 | 0.0 | 0.42 | 0.58 | 1.7 |
| 2m | 36.3 | 38.4 | 47.7 | 53.0 | 11.4 | -0.55 | -0.23 | 0.0 | 0.43 | 1.11 | 1.0 |
| 3m | 33.2 | 35.0 | 42.6 | 46.9 | 9.4 | -1.34 | -0.62 | 0.0 | 0.55 | 0.85 | 1.9 |
| 4m | 35.3 | 37.2 | 45.9 | 51.0 | 10.6 | 0.03 | 0.18 | 0.0 | -0.64 | -0.95 | -0.7 |
| 5m | 34.6 | 36.5 | 44.6 | 49.1 | 10.0 | -1.38 | -0.71 | 0.0 | 1.12 | 2.13 | 2.5 |
| 6m | 34.3 | 36.2 | 44.6 | 49.6 | 10.3 | -0.38 | -0.04 | 0.0 | -0.38 | -0.56 | 0.0 |
| 7m | 32.0 | 33.7 | 40.8 | 44.8 | 8.8 | -0.81 | -0.35 | 0.0 | 0.40 | 0.83 | 1.2 |
| 8m | 32.9 | 34.6 | 42.1 | 46.3 | 9.2 | -1.02 | -0.51 | 0.0 | 0.83 | 1.65 | 1.9 |
| 9m | 32.6 | 34.3 | 41.8 | 46.1 | 9.2 | -0.62 | -0.22 | 0.0 | 0.07 | 0.22 | 0.7 |
| 10m | 33.2 | 35.0 | 42.9 | 47.5 | 9.7 | -0.31 | -0.07 | 0.0 | 0.04 | 0.32 | 0.3 |
| 11m | 32.4 | 34.1 | 41.4 | 45.6 | 9.0 | -0.36 | -0.08 | 0.0 | -0.12 | -0.08 | 0.2 |
| 12m | 31.3 | 33.0 | 40.1 | 44.2 | 8.7 | -0.48 | -0.11 | 0.0 | -0.17 | -0.22 | 0.3 |
| 13m | 35.8 | 37.8 | 46.7 | 51.7 | 11.0 | -1.32 | -0.66 | 0.0 | 1.06 | 2.07 | 2.4 |
| 14m | 32.5 | 34.2 | 41.5 | 45.7 | 9.0 | -0.18 | 0.06 | 0.0 | -0.58 | -1.02 | -0.4 |
| 15m | 32.5 | 34.2 | 41.6 | 45.7 | 9.1 | -0.96 | -0.41 | 0.0 | 0.35 | 0.69 | 1.3 |

FIG_10

Δn1
r1
Δn3
r2
r3
Δn4
Δn2
r4
r (μm)

FIG_11

| | $r_1$ (μm) | $r_2$ (μm) | $r_3$ (μm) | $r_4$ (μm) | $10^3\Delta n_1$ | $10^3\Delta n_2$ | $10^3\Delta n_3$ | $10^3\Delta n_4$ |
|---|---|---|---|---|---|---|---|---|
| 16i | 2.74 | 6.93 | 11.70 | 14.44 | 9.50 | -2.50 | 3.00 | -4.50 |
| 17i | 3.06 | 4.90 | 11.04 | 12.24 | 9.80 | -6.80 | 2.21 | -3.59 |
| 18i | 3.21 | 5.70 | 9.13 | 13.44 | 8.86 | -7.70 | 5.00 | -3.00 |
| 19i | 2.90 | 6.21 | 11.17 | 13.79 | 9.50 | -3.50 | 3.00 | -3.50 |
| 20i | 3.29 | 5.74 | 10.40 | 11.95 | 8.00 | -6.50 | 3.00 | -3.50 |
| 21i | 3.00 | 5.57 | 11.14 | 14.29 | 9.50 | -4.00 | 3.00 | -5.00 |
| 22i | 2.67 | 6.32 | 12.22 | 14.05 | 9.50 | -3.00 | 1.50 | -5.00 |
| 23i | 2.78 | 6.36 | 11.13 | 13.25 | 9.50 | -4.00 | 2.50 | -4.50 |
| 24i | 3.29 | 5.74 | 10.40 | 11.96 | 8.00 | -6.50 | 3.00 | -3.50 |
| 25i | 3.07 | 5.87 | 10.67 | 13.34 | 9.30 | -5.80 | 3.80 | -7.60 |

# FIG_12

| | | Var Ray (%) | $\lambda_{cth}$ nm | $2W_{02}$ $\mu m$ | $S_{eff}$ $\mu m^2$ | $\lambda_0$ nm | C ps/nm-km | C' ps/nm².km | $PC_{1625}$ dB 100 tours $\phi$=60 mm | $S_{\mu c}$ |
|---|---|---|---|---|---|---|---|---|---|---|
| 16a | | 2.60% | 1695 | 6.97 | 37.5 | 1411 | 3.0 | 0.0094 | $<2.10^{-10}$ | 0.23 |
| 16b | | -2.60% | 1610 | 7.04 | 38.3 | 1748 | -3.0 | 0.0011 | $<10^{-7}$ | 0.45 |
| 17a | | 6.03% | 1848 | 6.81 | 37.1 | 1330 | 7.0 | 0.130 | $<8.10^{-17}$ | 0.08 |
| 17b | | -6.03% | 1640 | 6.94 | 38.3 | 1780 | -7.0 | 0.0026 | $<3.10^{-7}$ | 0.3 |
| 18a | | 4.26% | 1659 | 6.96 | 40.0 | 1328 | 5.0 | 0.0048 | $<2.10^{-11}$ | 0.21 |
| 18b | | -4.26% | 1525 | 7.09 | 42.2 | 1700 | -5.0 | 0.0117 | $<4.10^{-5}$ | 0.64 |
| 19a | | 5.06% | 1790 | 6.94 | 37.8 | 1351 | 6.0 | 0.0005 | $<2.10^{-13}$ | 0.13 |
| 19b | | -5.06% | 1619 | 7.07 | 39.4 | 1763 | -6.0 | -0.0001 | $<6.10^{-6}$ | 0.45 |
| 20a | | 2.35% | 1698 | 7.31 | 43.4 | 1359 | 3.0 | -0.0006 | $<7.10^{-7}$ | 0.55 |
| 20b | | -2.35% | 1621 | 7.41 | 44.9 | 1731 | -3.0 | -0.0034 | $<2.10^{-3}$ | 1.09 |
| 21a | | 0.97% | 1707 | 7.13 | 40.1 | 1476 | 1.0 | 0.0124 | $<3.10^{-13}$ | 0.16 |
| 21b | | -0.97% | 1675 | 7.16 | 40.5 | 1612 | -1.0 | 0.0134 | $<7.10^{-10}$ | 0.19 |
| 22a | | 2.73% | 1295 | 6.81 | 35.7 | 1422 | 3.0 | 0.0135 | $<3.10^{-8}$ | 0.34 |
| 22b | | -2.73% | 1228 | 6.88 | 36.2 | 1793 | -3.0 | 0.0036 | $<9.10^{-4}$ | 0.77 |
| 23a | | 4.84% | 1531 | 6.70 | 35.1 | 1352 | 6.0 | 0.0114 | $<3.10^{-10}$ | 0.21 |
| 23b | | -4.84% | 1391 | 6.79 | 35.9 | 1852 | -6.0 | -0.0124 | $<3.10^{-3}$ | 0.9 |
| 24a | | 3.13% | 1712 | 7.31 | 43.4 | 1345 | 4.0 | 0.0008 | $<3.10^{-7}$ | 0.49 |
| 24b | | -3.13% | 1609 | 7.43 | 45.3 | 1738 | -4.0 | -0.0025 | $<4.10^{-3}$ | 1.22 |
| 25a | | 6.46% | 1731 | 6.9 | 38.1 | 1311 | 8.0 | 0.0090 | $<2.10^{-14}$ | 0.12 |
| 25b | | -6.46% | 1523 | 7.0 | 40.4 | 1728 | -8.0 | 0.0118 | $<3.10^{-5}$ | 0.62 |

FIG_13

| | $S_{eff}$ | $S_{eff}$ | $S_{eff}$ | $S_{eff}$ | C | C | C | C | PC10mm | PC10mm | PC10mm | PC30mm | PC30mm | PC30mm |
|---|---|---|---|---|---|---|---|---|---|---|---|---|---|---|
| | $\mu m^2$ | $\mu m^2$ | $\mu m^2$ | $\mu m^2$ | ps/nm-km | ps/nm-km | ps/nm-km | ps/nm-km | dB/m | dB/m | dB/m | dB/m | dB/m | dB/m |
| | 1460 nm | 1500 nm | 1625 nm | 1675 nm | 1460 nm | 1500 nm | 1625 nm | 1675 nm | 1550 nm | 1625 nm | 1675 nm | 1550 nm | 1625 nm | 1675 nm |
| 16a | 33.5 | 35.1 | 42.0 | 45.9 | 1.5 | 2.3 | 3.4 | 3.6 | <5 | <50 | <50 | $<1.10^{-5}$ | $<1.10^{-4}$ | $<1.10^{-3}$ |
| 16b | 33.2 | 35.3 | 44.3 | 49.5 | -3.5 | -3.2 | -2.8 | -2.2 | <5 | <50 | <100 | $<1.10^{-5}$ | $<5.10^{-3}$ | <0.01 |
| 17a | 33.3 | 34.7 | 39.9 | 42.8 | 5.2 | 6.2 | 7.7 | 7.9 | <5 | <50 | <50 | $<1.10^{-5}$ | $<1.10^{-4}$ | $<1.10^{-3}$ |
| 17b | 32.2 | 34.3 | 43.7 | 49.0 | -7.1 | -7.1 | -6.4 | -5.3 | <5 | <50 | <50 | $<1.10^{-5}$ | $<1.10^{-4}$ | $<1.10^{-3}$ |
| 18a | 35.9 | 37.5 | 44.8 | 48.9 | 4.2 | 4.7 | 5.3 | 5.7 | <5 | <50 | <50 | $<1.10^{-5}$ | $<1.10^{-4}$ | $<1.10^{-3}$ |
| 18b | 35.7 | 38.3 | 49.9 | 56.4 | -5.5 | -5.4 | -3.4 | -1.4 | <10 | <50 | <100 | $<1.10^{-5}$ | $<5.10^{-3}$ | <0.05 |
| 19a | 34.2 | 35.7 | 41.8 | 45.1 | 4.3 | 5.2 | 6.5 | 6.6 | <5 | <50 | <50 | $<1.10^{-5}$ | $<1.10^{-4}$ | $<1.10^{-3}$ |
| 19b | 33.6 | 35.9 | 46.2 | 52.2 | -6.0 | -6.0 | -5.5 | -4.3 | <5 | <50 | <100 | $<1.10^{-5}$ | $<5.10^{-3}$ | $<5.10^{-3}$ |
| 20a | 38.5 | 40.5 | 49.4 | 54.7 | 2.5 | 2.9 | 2.9 | 2.9 | <10 | <50 | <150 | $<1.10^{-5}$ | $<5.10^{-3}$ | <0.05 |
| 20b | 38.4 | 40.9 | 53.0 | 60.2 | -2.8 | -2.8 | -2.9 | -2.0 | <50 | <200 | <600 | $<5.10^{-4}$ | <0.05 | <2.0 |
| 21a | 35.4 | 37.3 | 45.5 | 50.0 | -0.3 | 0.3 | 2.1 | 3.2 | <5 | <50 | <50 | $<1.10^{-5}$ | $<1.10^{-4}$ | $<1.10^{-3}$ |
| 21b | 35.3 | 37.4 | 46.4 | 51.3 | -2.2 | -1.6 | 0.3 | 1.8 | <5 | <50 | <50 | $<1.10^{-5}$ | $<1.10^{-4}$ | $<1.10^{-3}$ |
| 22a | 32.0 | 33.5 | 39.7 | 43.1 | 1.2 | 2.1 | 3.7 | 3.9 | <5 | <50 | <50 | $<1.10^{-5}$ | $<1.10^{-4}$ | $<5.10^{-3}$ |
| 22b | 31.6 | 33.5 | 41.5 | 46.1 | -3.8 | -3.3 | -2.8 | -2.6 | <15 | <100 | <200 | $<1.10^{-4}$ | <0.05 | <2.0 |
| 23a | 31.9 | 33.2 | 38.6 | 41.6 | 4.3 | 5.2 | 6.3 | 6.1 | <5 | <50 | <50 | $<1.10^{-5}$ | $<1.10^{-4}$ | $<1.10^{-3}$ |
| 23b | 31.0 | 33.0 | 41.8 | 47.1 | -5.3 | -5.5 | -6.9 | -7.0 | <20 | <150 | <600 | $<5.10^{-4}$ | <0.1 | <2.0 |
| 24a | 38.6 | 40.5 | 49.0 | 54.0 | 3.3 | 3.8 | 3.9 | 3.9 | <10 | <50 | <150 | <1.10-5 | $<5.10^{-3}$ | <0.01 |
| 24b | 38.4 | 41.1 | 53.7 | 61.4 | -3.7 | -3.8 | -3.7 | -2.6 | <50 | <250 | <600 | $<5.10^{-4}$ | <0.1 | <2.0 |
| 25a | 34.7 | 36.0 | 41.7 | 44.9 | 6.5 | 7.4 | 8.3 | 8.4 | <5 | <50 | <50 | <1.10-5 | $<1.10^{-4}$ | $<1.10^{-3}$ |
| 25b | 33.9 | 36.5 | 48.2 | 54.9 | -8.3 | -8.3 | -6.1 | -3.6 | <5 | <50 | <100 | <1.10-5 | $<5.10^{-3}$ | <0.05 |

FIG_14

| | $S_{eff}$ | $S_{eff}$ | $S_{eff}$ | $S_{eff}$ | $\Delta S_{eff}$ | C | C | C | C | $\Delta C$ |
|---|---|---|---|---|---|---|---|---|---|---|
| | $\mu m^2$ | $\mu m^2$ | $\mu m^2$ | $\mu m^2$ | $\mu m^2$ | ps/nm-km | ps/nm-km | ps/nm-km | ps/nm-km | ps/nm-km |
| | 1460 nm | 1500 nm | 1625 nm | 1675 nm | Entre 1460 nm et 1625 nm | 1460 nm | 1500 nm | 1625 nm | 1675 nm | Entre 1460 nm et 1625 nm |
| 16m | 33.4 | 35.2 | 43.2 | 47.7 | 9.8 | -1.02 | -0.41 | 0.30 | 0.67 | 1.3 |
| 17m | 32.8 | 34.5 | 41.8 | 45.9 | 9.0 | -0.98 | -0.46 | 0.65 | 1.33 | 1.6 |
| 18m | 35.8 | 37.9 | 47.3 | 52.7 | 11.6 | -0.66 | -0.35 | 0.94 | 2.13 | 1.6 |
| 19m | 33.9 | 35.8 | 44.0 | 48.7 | 10.1 | -0.87 | -0.37 | 0.50 | 1.15 | 1.4 |
| 20m | 38.4 | 40.7 | 51.2 | 57.5 | 12.8 | -0.12 | 0.04 | 0.00 | 0.47 | 0.1 |
| 21m | 35.3 | 37.3 | 45.9 | 50.7 | 10.6 | -1.25 | -0.65 | 1.20 | 2.48 | 2.5 |
| 22m | 31.8 | 33.5 | 40.6 | 44.6 | 8.8 | -1.33 | -0.58 | 0.43 | 0.66 | 1.8 |
| 23m | 31.5 | 33.1 | 40.2 | 44.4 | 8.8 | -0.53 | -0.12 | -0.28 | -0.45 | 0.2 |
| 24m | 38.5 | 40.8 | 51.4 | 57.7 | 12.9 | -0.19 | -0.01 | 0.11 | 0.65 | 0.3 |
| 25m | 34.3 | 36.3 | 45.0 | 49.9 | 10.7 | -0.87 | -0.47 | 1.11 | 2.39 | 2.0 |

FIG_15

Dispersion (ps/nm.km)
10
5
0
-5
-10
-15
1200
1250
1300
1350
1400
1450
1500
1550
1600
1650
1700
Longueur d'onde (nm)


FIG_16

Dispersion (ps/nm.km)
8
6
4
2
0
-2
-4
-6
-8
1450
1475
1500
1525
1550
1575
1600
1625
1650
1675
Longueur d'onde (nm)

FIG_17

10
5
0
-5
-10
-15
Dispersion (ps/nm.km)
1200 1250 1300 1350 1400 1450 1500 1550 1600 1650 1700
Longueur d'onde (nm)

FIG_18

8
6
4
2
0
-2
-4
-6
-8
Dispersion (ps/nm.km)
1450 1475 1500 1525 1550 1575 1600 1625 1650 1675
Longueur d'onde (nm)

FIG_19

10
5
0
-5
-10
-15
Dispersion (ps/nm.km)
1200 1250 1300 1350 1400 1450 1500 1550 1600 1650 1700
Longueur d'onde (nm)

FIG_20

8
6
4
2
0
-2
-4
-6
-8
Dispersion (ps/nm.km)
1450 1475 1500 1525 1550 1575 1600 1625 1650 1675
Longueur d'onde (nm)

FIG_21

15
10
5
0
-5
-10
-15
Dispersion (ps/nm.km)
1200 1250 1300 1350 1400 1450 1500 1550 1600 1650 1700
Longueur d'onde (nm)

FIG_22

11
9
7
5
3
1
-1
-3
-5
-7
-9
-11
Dispersion (ps/nm.km)
1450 1475 1500 1525 1550 1575 1600 1625 1650 1675
Longueur d'onde (nm)

FIG_23

Dispersion (ps/nm.km)
5
3
1
-1
-3
-5
-7
-9
-11
-13
-15
1200 1250 1300 1350 1400 1450 1500 1550 1600 1650 1700
Longueur d'onde (nm)

FIG_24

Dispersion (ps/nm.km)
5
3
1
-1
-3
-5
1450 1475 1500 1525 1550 1575 1600 1625 1650 1675
Longueur d'onde (nm)

Office européen des brevets

# RAPPORT DE RECHERCHE EUROPEENNE

Numéro de la demande
EP 03 29 1729

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br><br>Y | WO 01 92928 A (CORNING INC)<br>6 décembre 2001 (2001-12-06)<br>* abrégé *<br>* figure 1 *<br>* page 19 - page 20 * | 1-5,9,<br>11,19-23<br>13-18 | G02B6/16<br>G02B6/22<br>H04B10/18<br>G02B6/34 |
| Y | US 6 421 490 B1 (LIU YANMING)<br>16 juillet 2002 (2002-07-16)<br>* figure 2; tableau 2 * | 13-18 | |
| X | EP 1 116 697 A (SAMSUNG ELECTRONICS CO LTD) 18 juillet 2001 (2001-07-18)<br>* abrégé; figure 4 * | 1,19 | |
| X | US 2001/0008077 A1 (BERKEY GEORGE E)<br>19 juillet 2001 (2001-07-19)<br>* abrégé * | 1 | |
| A | US 2002/0090186 A1 (FLEURY LUDOVIC ET AL)<br>11 juillet 2002 (2002-07-11) | | |
| | | | DOMAINES TECHNIQUES RECHERCHES (Int.Cl.7) |
| A | US 2002/0076186 A1 (DE MONTMORILLON ET AL.) 20 juin 2002 (2002-06-20) | | G02B<br>H04B |
| A | WO 99 42869 A (CORNING INC ;LIU YANMING (US)) 26 août 1999 (1999-08-26) | | |
| A | US 6 396 987 B1 (CHARIOT JEAN-FRANCOIS ET AL) 28 mai 2002 (2002-05-28) | | |

Le présent rapport a été établi pour toutes les revendications

| Lieu de la recherche | Date d'achèvement de la recherche | Examinateur |
|---|---|---|
| La Haye | 17 novembre 2003 | Verbandt, Y |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO. EP 03 29 1729

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-11-2003

| Document brevet cité au rapport de recherche | | Date de publication | Membre(s) de la famille de brevet(s) | | | Date de publication |
|---|---|---|---|---|---|---|
| WO 0192928 | A | 06-12-2001 | AU | 6302701 | A | 11-12-2001 |
| | | | EP | 1292851 | A2 | 19-03-2003 |
| | | | WO | 0192928 | A2 | 06-12-2001 |
| | | | US | 2002003938 | A1 | 10-01-2002 |
| US 6421490 | B1 | 16-07-2002 | US | 2002191927 | A1 | 19-12-2002 |
| | | | AU | 750557 | B2 | 25-07-2002 |
| | | | AU | 3180599 | A | 06-09-1999 |
| | | | BR | 9907943 | A | 24-10-2000 |
| | | | CA | 2318423 | A1 | 26-08-1999 |
| | | | CN | 1120379 | B | 03-09-2003 |
| | | | EP | 1066540 | A1 | 10-01-2001 |
| | | | JP | 2002504702 | T | 12-02-2002 |
| | | | WO | 9942869 | A1 | 26-08-1999 |
| EP 1116697 | A | 18-07-2001 | EP | 1116697 | A2 | 18-07-2001 |
| | | | JP | 2001199736 | A | 24-07-2001 |
| | | | KR | 2001086347 | A | 10-09-2001 |
| | | | US | 2001041038 | A1 | 15-11-2001 |
| US 2001008077 | A1 | 19-07-2001 | US | 5894537 | A | 13-04-1999 |
| | | | US | 6173588 | B1 | 16-01-2001 |
| | | | US | 2002069677 | A1 | 13-06-2002 |
| | | | AU | 693329 | B2 | 25-06-1998 |
| | | | AU | 5046196 | A | 24-10-1996 |
| | | | BR | 9601344 | A | 13-01-1998 |
| | | | CA | 2174055 | A1 | 14-10-1996 |
| | | | CN | 1165305 | A | 19-11-1997 |
| | | | DE | 69621974 | D1 | 01-08-2002 |
| | | | DE | 69621974 | T2 | 16-01-2003 |
| | | | DK | 737873 | T3 | 21-10-2002 |
| | | | EP | 0737873 | A2 | 16-10-1996 |
| | | | EP | 0949519 | A1 | 13-10-1999 |
| | | | EP | 0949520 | A1 | 13-10-1999 |
| | | | JP | 8320419 | A | 03-12-1996 |
| | | | RU | 2178901 | C2 | 27-01-2002 |
| | | | US | 6044191 | A | 28-03-2000 |
| | | | AU | 733718 | B2 | 24-05-2001 |
| | | | AU | 3203697 | A | 19-11-1997 |
| | | | BR | 9702176 | A | 02-03-1999 |
| | | | CA | 2220416 | A1 | 06-11-1997 |
| | | | CN | 1189812 | A ,B | 05-08-1998 |
| | | | EP | 0835227 | A1 | 15-04-1998 |
| | | | JP | 11513968 | T | 30-11-1999 |
| | | | RU | 2169710 | C2 | 27-06-2001 |
| | | | WO | 9741076 | A1 | 06-11-1997 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE RELATIF A LA DEMANDE DE BREVET EUROPEEN NO.** EP 03 29 1729

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-11-2003

| Document brevet cité au rapport de recherche | Date de publication | Membre(s) de la famille de brevet(s) | Date de publication |
|---|---|---|---|
| US 2002090186 A1 | 11-07-2002 | FR 2815418 A1 | 19-04-2002 |
| | | CN 1373569 A | 09-10-2002 |
| | | CN 1373374 A | 09-10-2002 |
| | | EP 1217399 A1 | 26-06-2002 |
| | | EP 1213595 A2 | 12-06-2002 |
| | | FR 2815420 A1 | 19-04-2002 |
| | | JP 2002182057 A | 26-06-2002 |
| | | JP 2002185404 A | 28-06-2002 |
| | | US 2002076185 A1 | 20-06-2002 |
| US 2002076186 A1 | 20-06-2002 | FR 2816065 A1 | 03-05-2002 |
| | | CN 1351267 A | 29-05-2002 |
| | | EP 1202088 A1 | 02-05-2002 |
| | | JP 2002182053 A | 26-06-2002 |
| WO 9942869 A | 26-08-1999 | AU 750557 B2 | 25-07-2002 |
| | | AU 3180599 A | 06-09-1999 |
| | | BR 9907943 A | 24-10-2000 |
| | | CA 2318423 A1 | 26-08-1999 |
| | | CN 1120379 B | 03-09-2003 |
| | | EP 1066540 A1 | 10-01-2001 |
| | | JP 2002504702 T | 12-02-2002 |
| | | WO 9942869 A1 | 26-08-1999 |
| | | US 2002191927 A1 | 19-12-2002 |
| | | US 6421490 B1 | 16-07-2002 |
| US 6396987 B1 | 28-05-2002 | FR 2790107 A1 | 25-08-2000 |
| | | EP 1030199 A1 | 23-08-2000 |
| | | EP 1046069 A1 | 25-10-2000 |
| | | WO 0017681 A1 | 30-03-2000 |
| | | JP 2002525671 T | 13-08-2002 |
| | | US 6535676 B1 | 18-03-2003 |

EPO FORM P0460

Pour tout renseignement concernant cette annexe : voir Journal Officiel de l'Office européen des brevets, No.12/82